Europäisches Patentamt

European Patent Office

Office européen des brevets

(19)

(11) **EP 1 600 803 A1**

(12) **EUROPEAN PATENT APPLICATION**
published in accordance with Art. 158(3) EPC

(43) Date of publication:
**30.11.2005 Bulletin 2005/48**

(51) Int Cl.[7]: **G02B 13/00**

(21) Application number: **04716352.2**

(86) International application number:
**PCT/JP2004/002532**

(22) Date of filing: **02.03.2004**

(87) International publication number:
**WO 2004/079426 (16.09.2004 Gazette 2004/38)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **04.03.2003 JP 2003056539**

(71) Applicant: **Nalux Co. Ltd.**
**Mishima-gun, Osaka 618-0001 (JP)**

(72) Inventors:
• **HATADE, Kouei, c/o Nalux Co., Ltd**
  **Mishima-gun, Osaka 6180001 (JP)**
• **SAKAGAMI, Norihisa, c/o Nalux Co., Ltd.**
  **Mishima-gun, Osaka 6180001 (JP)**

(74) Representative: **Rupp, Christian et al**
**Mitscherlich & Partner,**
**Patent- und Rechtsanwälte,**
**Postfach 33 06 09**
**80066 München (DE)**

(54) **IMAGING OPTICAL SYSTEM**

(57)    An imaging optical system capable of being reduced in field curvature and astigmatism with requirements for small size and low cost fulfilled. The system comprises at least one optical element at least one surface of which is divided into at least one stripe-form area surrounding the optical axis and a center area including the optical axis so as to compensate for field curvature and/or astigmatism due to the imaging optical system, with step difference provided between at least one stripe-form area and the center area. According to one embodiment of this invention, the profiles of the surfaces constituting the at least one strip-form area and the center area are individually determined so as to further compensate for field curvature and/or astigmatism due to the imaging optical system.

**FIG. 1**

EP 1 600 803 A1

**Description**

Technical Field

The present invention relates to an imaging optical system such as a solid-state image pickup device lens for a digital camera, a mobile phone with image pickup function, and a scanner and a scanning lens for a laser printer.

Background Art

Demand for miniaturization is rising increasingly in solid-state image pickup device lenses for mobile instruments such as digital cameras and mobile phones and scanning optical systems for printing apparatuses such as laser printers. Therefore, demand for miniaturization also is rising in imaging optical systems which are used in the instruments such as mobile devices and printing apparatuses. A method of decreasing the number of lenses, a method of reducing a distance between a lens and an image surface, a method of increasing an angle of view, and the like can be cited as conventional methods of miniaturizing imaging optical systems. However, in these cases, there is generated a problem that field curvature and astigmatism are enlarged.

Examples of the conventional methods of decreasing field curvature and the astigmatism include optimization of a lens profile of an imaging optical system, increase in the number of lenses, and use of a glass in which a refractive index, a dispersion value, and the like are widely changed as a lens material.

However, in the conventional methods, because the structure of imaging optical systems is complicated, demand for miniaturization cannot be satisfied, and cost of imaging optical systems is increased due to materials and machining.

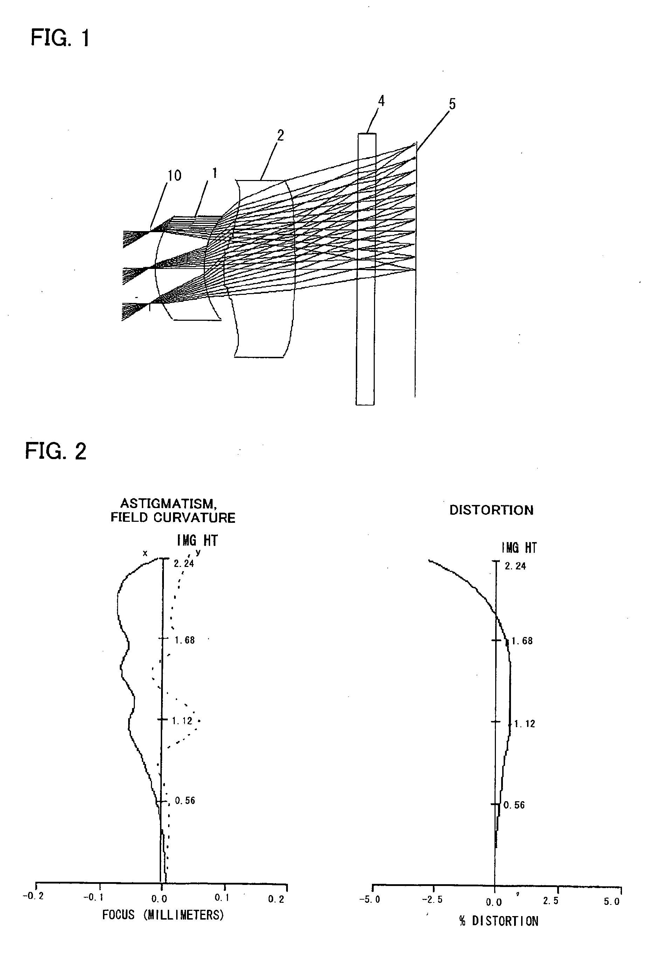

In image reading apparatuses such as image scanners, copying machines, and facsimile machines, for example, Japanese Patent Application Laid-Open No. 5-14602 proposes an image reading apparatus, in which astigmatism is corrected well by providing an optical member whose refractive power in a direction perpendicular to an optical axis is rotational asymmetry in an optical path between an imaging system and image reading means (see paragraphs Nos. 15 to 32, Figs. 1 to 6, and the like). For an imaging lens for image reading which forms the image of image information of an original, in the image reading apparatus, for example, Japanese Patent Application Laid-Open No. 2000-171705 proposes an imaging lens and an image reading apparatus utilizing the imaging lens (see paragraphs Nos. 92 and 93, Figs. 1 and 2, and the like). In the imaging lens proposed in Japanese Patent Application Laid-Open No. 2000-171705, at least one surface of plural surfaces constituting the imaging lens has a refractive power rotationally asymmetrical to the optical axis. However, in the case of the former, it is necessary that a new optical member is arranged in the optical path, which results in problems that the apparatus is enlarged and adjustment items are increased during assembly In the case of the latter, because the lens having a rotationally-asymmetrical refractive index distribution is used, assuming that the optical axis is a Z axis, there is a problem that an arrangement of the lens in X and Y axes is necessary, thus requiring assembly man-hour.

Therefore, particularly in mobile instruments such as digital cameras and mobile phones, from viewpoints of demand for miniaturization and simple machining and assembly, conventionally field curvature and astigmatism are dealt with by adjusting a position of the image surface (sensor surface of the solid-state image pickup device such as a CCD). As a result, there are such problems that the adjustment requires large man-hour and resolving power of a portion having a large angle of view is sacrificed even if the adjustment is optimally performed.

Disclosure of the Invention

In view of the foregoing, an object of the invention is to provide an imaging optical system which can be realized by a relatively simple structure and an inexpensive material and thereby can decrease field curvature and astigmatism while satisfying demands for miniaturization and lower cost.

An imaging optical system of the invention includes at least one optical element, wherein at least one of surfaces of at least one optical element is divided into at least one zone area surrounding an optical axis and a central area including the optical axis and a step is provided between the at least one zone area and the central area so as to compensate field curvature and/or astigmatism caused by the imaging optical system. Accordingly, the field curvature and/or astigmatism caused by the imaging optical system can be compensated by adjusting the arrangement and the number of at least one zone area and central area and the step.

According to one embodiment of the invention, profiles of surfaces constituting at least one zone area and the central area are separately determined so as to compensate the field curvature and/or the astigmatism caused by the imaging optical system. Therefore, the field curvature and/or astigmatism caused by the imaging optical system can be compensated by separately adjusting the profiles of the surfaces constituting at least one zone area and central area.

According to one embodiment of the invention, when the surfaces constituting at least one zone area and the central area are expressed by definition formulas in which an intersection point between each surface and the optical axis is set at an origin, origins on the optical axis of the surfaces differ from one another. Therefore, the field curvature and/or astigmatism caused by the imaging optical system can be compensated by the adjusting origins of the definition formulas of the surfaces constituting at least one zone area and central area.

An imaging optical system of the invention includes at least one optical element, wherein at least one of surfaces of at least one optical element is divided into at least one zone area surrounding an optical axis and a central area including the optical axis in order to compensate field curvature and/or astigmatism caused by the imaging optical system, and profiles of surfaces constituting at least one zone area and the central area are separately determined. Accordingly, the field curvature and/or astigmatism caused by the imaging optical system can be compensated by separately adjusting the arrangement and the number of at least one zone area and central area and the profiles of the surfaces constituting at least one zone area and central area.

According to one embodiment of the invention, a step is provided between the at least one zone area and the central area so as to compensate the field curvature and/or the astigmatism caused by the imaging optical system. Therefore, the field curvature and/or astigmatism caused by the imaging optical system can be compensated by adjusting the step between the arrangements of at least one zone area and central area.

According to one embodiment of the invention, the step in an optical axis direction in a boundary between the central area and the zone area or in a boundary between the plural zone areas, is defined so as to satisfy the following formula:

$$1 < \lambda/(n-1),$$

where $\lambda$ is a wavelength of light and n is a refractive index of a lens. Therefore, the step reflected into the image can be eliminated and the optical interference caused by the step can be suppressed.

According to one embodiment of the invention, when the surfaces constituting at least one zone area and the central area are expressed by definition formulas in which an intersection point between each surface and the optical axis is set at an origin, origins on the optical axis of the surfaces differ from one another. Therefore, the field curvature and/or astigmatism caused by the imaging optical system can be compensated by adjusting the origins of the definition formulas of the surfaces constituting at least one zone area and central area.

According to one embodiment of the invention, the surfaces constituting at least one zone area and the central area are defined by aspherical formulas. Therefore, field curvature and/or astigmatism caused by the imaging optical system can be compensated by separately adjusting coefficients of the aspherical formulas of the surfaces constituting at least one zone area and central area.

According to one embodiment of the invention, an inclination of a step surface in the boundary between the central area and the zone area or in the boundary between the plural zone areas is determined as a function of an angle of a light beam passing through the boundary portion. Therefore, the influence of discontinuity in the step on aberration can be reduced by bringing the inclination of the surface close to angle of the light beam passing through the boundary portion.

According to one embodiment of the invention, when it is assumed that the step surface is parallel to the optical axis in the boundary between the central area and the zone area or in the boundary between the plural zone areas, the inclination of the step surface is determined with respect to the optical axis so as to become angles ranging between a minimum angle and a maximum angle of light incident to the step surface. Therefore, the influence of discontinuity in the step on aberration can be reduced by bringing the inclination of the surface close to the angle the light beam passing through the boundary portion.

According to one embodiment of the invention, when it is assumed that the step surface is parallel to the optical axis in the boundary between the central area and the zone area or in the boundary between the plural zone areas, the inclination of the step surface is determined with respect to the optical axis so as to become an average angle of the angles of light incident to the step surface. Therefore, the influence of discontinuity in the step on aberration can be reduced by bringing the inclination of the surface close to angles the light beam passing through the boundary portion.

According to one embodiment of the invention, peripheries of at least one zone area and the central area are defined by circles whose centers are points on the optical axis. Therefore, the boundaries between the areas can be defined by determining radiuses of the circles constituting the peripheries of the areas.

According to one embodiment of the invention, a diffractive optical element is provided in at least one surface of at least one optical element. Therefore, chromatic aberration can be corrected by utilizing effect of the negative Abbe number owned by the diffractive optical element.

According to one embodiment of the invention, at least one optical element is a lens. Therefore, the invention can widely be used in imaging optical systems, such as the solid-state image pickup device lens for digital cameras, mobile phones with image pickup function, and scanners and scanning lenses for laser printers, in which conventionally field curvature and/or astigmatism has been a problem.

According to one embodiment of the invention, an imaging optical system includes a lens having a positive focal distance and a lens having a negative focal distance, wherein Abbe number of the lens having the negative focal distance is smaller than Abbe number of the lens having the positive focal distance. Therefore, the longitudinal chromatic aberration can be corrected by properly determining the positive and negative focal distances and the Abbe numbers.

According to one embodiment of the invention, an imaging optical system includes three lenses, wherein two of the three lenses have positive focal distances and the other has a negative focal distance. Therefore, longitudinal chromatic aberration can be corrected by properly determining the positive and negative focal distances and the Abbe numbers of the three lenses.

According to one embodiment of the invention, an imaging optical system includes a plurality of lenses having a common optical axis, wherein the focal distance of the whole system is changed by changing a distance between the lenses in an optical axis direction. Therefore, the invention can realize the optical zoom imaging optical system which can decrease field curvature and astigmatism while satisfying demands for miniaturization and lower cost.

According to one embodiment of the invention, the surfaces expressing the central area and at least one zone area are optical axis symmetric rotation surfaces in which the following quadratic curve is rotated about the optical axis :

$$h = \sqrt{x^2 + y^2}$$

$$c_j = \frac{1}{R_j}$$

$$Z_j = \frac{c_j h^2}{1 + \sqrt{1 - (1 + k_j) c_j^2 h^2}} + \sum_{i=1}^{m} A_{ij} h^i + d_j$$

where z is the optical axis, x and y are an coordinate of the surface perpendicular to the optical axis, k is a constant defining the profile of the quadratic curve, c is a central curvature, A is an correction coefficient, j is an identification number of the central area and zone areas surrounding the central area, the central area is set at the number of 1, the number is assigned in the order from the inside, and a center shift amount $d_j$ is determined based on the origin on the optical axis of the central area. Therefore, the field curvature and/or astigmatism caused by the imaging optical system can be compensated by separately adjusting the coefficients of the aspherical formulas.

Brief Description of the Drawings

Fig. 1 is a view showing a lens section and an optical path of Numerical Example 1 of the invention;
Fig. 2 is a view showing aberration of Numerical Example 1 of the invention;
Fig. 3 is a view showing a lens section and an optical path of Numerical Example 2 of the invention;
Fig. 4 is a view showing aberration of Numerical Example 2 of the invention;
Fig. 5 is a view showing a lens section and an optical path of Numerical Example 3 of the invention;
Fig. 6 is a view showing aberration of Numerical Example 3 of the invention;
Fig. 7 is a view showing a lens section and an optical path of the conventional Numerical Example A for comparing to Numerical Example 1;
Fig. 8 is a view showing aberration of the conventional Numerical Example A for comparing to Numerical Example 1;
Fig. 9 is a view showing aberration of the conventional Numerical Example B for comparing to Numerical Example 2;
Fig. 10 is a view showing aberration of the conventional Numerical Example C for comparing to Numerical Example 3;
Fig. 11 is a view showing a lens section and an optical path of Numerical Example 4 of the invention;
Fig. 12 is a view showing aberration of Numerical Example 4 of the invention;

Fig. 13 is a view showing a lens section and an optical path of Numerical Example 5 of the invention;

Fig. 14 is a view showing aberration of Numerical Example 5 of the invention;

Fig. 15 is a view showing a lens section and an optical path of Numerical Example 6 of the invention;

Fig. 16 is a view showing aberration of Numerical Example 6 of the invention;

Fig. 17 is a view showing a lens section and an optical path of Numerical Example 7 of the invention;

Fig. 18 is a view showing aberration of Numerical Example 7 of the invention;

Fig. 19 is a view showing aberration of the conventional Numerical Example D for comparing to Numerical Example 4;

Fig. 20 is a view showing aberration of the conventional Numerical Example E for comparing to Numerical Example 5;

Fig. 21 is a view showing aberration of the conventional Numerical Example F for comparing to Numerical Example 7;

Fig. 22 is a view showing a lens section and an optical path of Numerical Example 8 of the invention;

Fig. 23 is a view showing aberration of Numerical Example 8 of the invention; and

Fig. 24 shows a relationship between a focal distance and an image height of a lens drive type zoom imaging lens.

Best Mode for Carrying Out the Invention

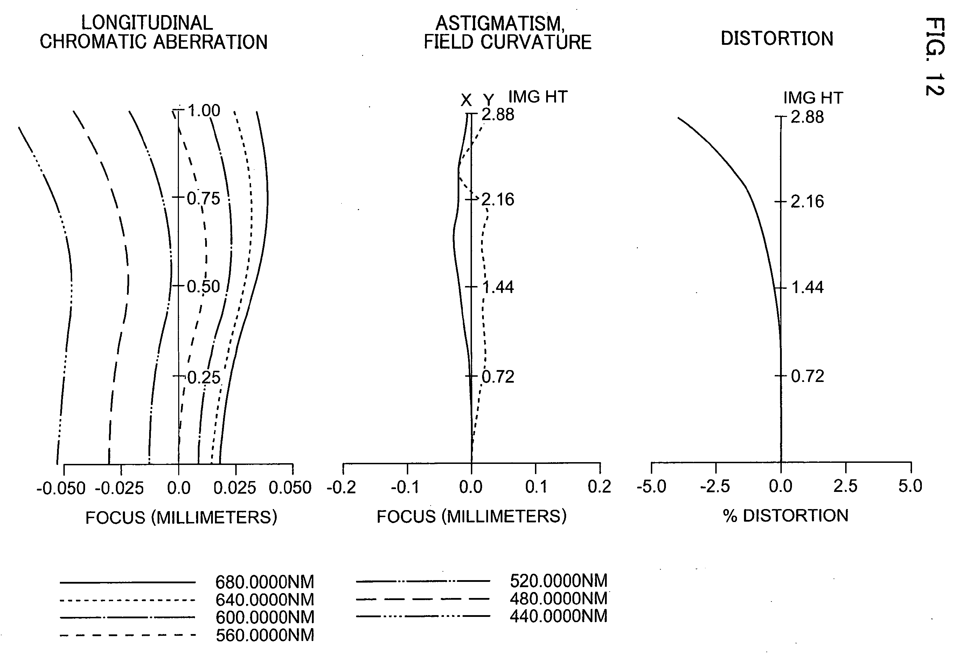

Figs. 1, 3, 5, 11, 13, 15, 17, and 22 are views showing lens sections and optical paths of the later-mentioned Numerical Examples 1 to 8 of the invention. Figs. 2, 4, 6, 12, 14, 16, 18, and 23 are views showing aberrations of the later-mentioned Numerical Examples 1 to 8 of the invention. In the aberration views of Figs. 2, 4, and 6, the left view shows positions (deviation from image surface, in terms of mm) of a meridional image surface (dotted line) and a sagittal image surface (solid line) for an image height, i.e. field curvature and astigmatism. The right view shows distortion (in terms of percent) for the image height. In Figs. 12, 14, 16, 18 and 23, the left view shows longitudinal chromatic aberration. The central view shows the positions (deviation from image surface, in terms of mm) of the meridional image surface (dotted line) and the sagittal image surface (solid line) for the image height, i.e. the field curvature and the astigmatism. The right view shows the distortion (in terms of percent) for the image height.

In Numerical Examples 1 to 3, the imaging optical systems include two lenses, one lens, and three lenses respectively. In each of Numerical Examples 1 to 3, at least one zone area surrounding the optical axis and a central area including the optical axis are provided in one of surfaces of one lens so as to compensate the field curvature and/or the astigmatism caused by the imaging optical system.

In Numerical examples 4 to 8, each of the imaging optical systems includes three lenses. In each of Numerical Examples 4 to 8, at least one zone area surrounding the optical axis and the central area including the optical axis are provided in the surface nearest to the image side so as to compensate the field curvature and/or the astigmatism caused by the imaging optical system.

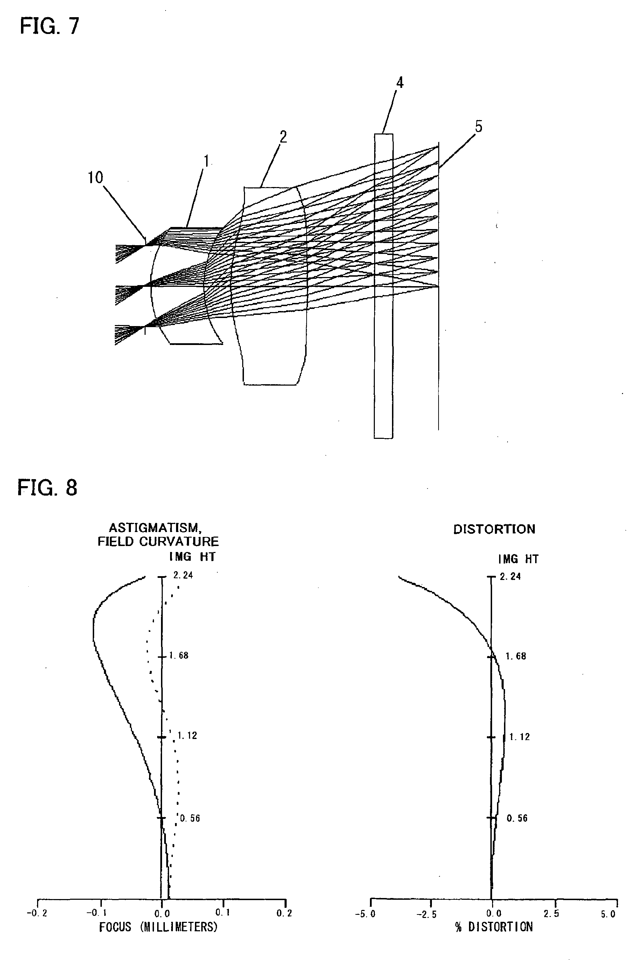

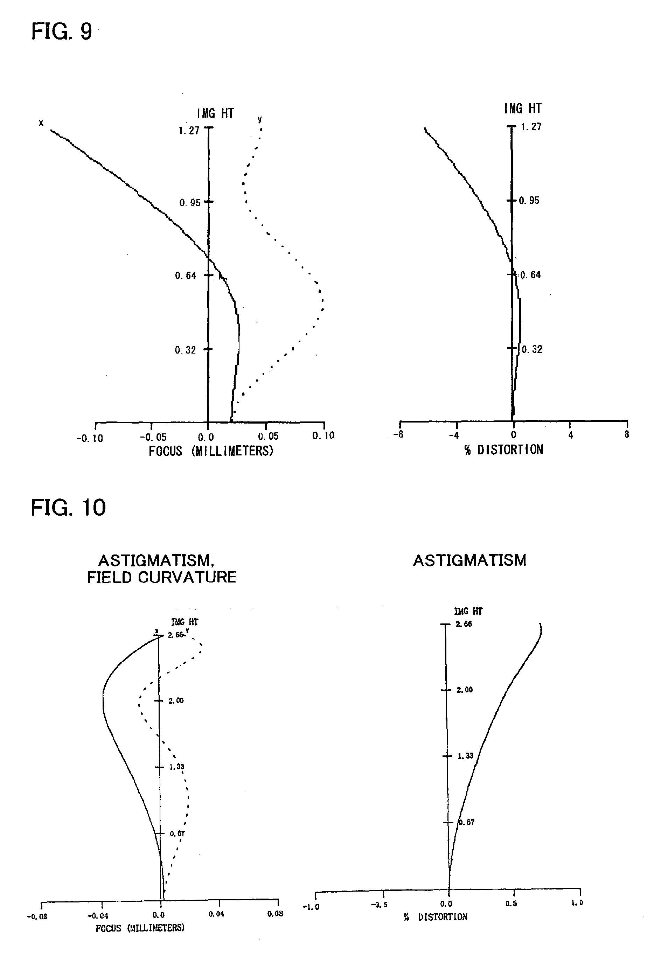

Fig. 7 is a view showing a lens section and an optical path of the conventional Numerical Example A for comparing to Numerical Example 1. Fig. 8 is a view showing the aberration of the conventional Numerical Example A. Figs. 9, 10, 19, 20, and 21 are views showing the aberrations of the conventional Numerical Examples B to F for comparing to Numerical Examples 2, 3, 4, 5, and 7 of the invention respectively.

A step in an optical axis direction may exist in a boundary between the central area and the zone area or in the boundaries between the plural zone areas. A structure of a step surface will be described. A flare is generated by the light beam incident to the step surface. In the case where the step surface is arranged in parallel with the optical axis in order to reduce the amount of flare, it is preferable that inclination of the step surface to the optical axis is fixed so as to be an angle between a minimum angle and a maximum angle of the light beam incident to the step surface. In the case where the step surface is arranged in parallel with the optical axis, the inclination of the step surface to the optical axis may be fixed so as to be an average angle of the light beams incident to the step surface.

It is preferable that a step 1 in the optical axis direction in the boundary between the central area and the zone area or in the boundaries between the plural zone areas satisfies the following formula:

$$1 < \lambda/(n-1)$$

where $\lambda$ is a wavelength of light and n is a refractive index of the lens. When the step is provided so as to satisfy the above formula, the step reflected into the image can be eliminated and optical interference caused by the step can be suppressed.

Then, Numerical Examples will be described.

(Numerical Example 1)

As shown in Fig. 1, in Numerical Example 1, the imaging optical system includes two lenses and a glass plate. The light incident from an object through an aperture surface 10 reaches a sensor surface 5 through a first lens 1, a second lens 2, and a glass plate 4. An incident plane and an outgoing plane of the first lens 1, the incident plane and the outgoing plane of the second lens 2, and the incident plane and the outgoing plane of the glass plate 4 are referred to as second surface to fifth surface, eighth surface, and ninth surface respectively. The second surface, the third surface, and the fifth surface are defined by a single aspheric formula. The fourth surface, i.e. the incident plane of the second lens 2 is an astigmatism correction surface, i.e. the surface in which at least one zone area surrounding the optical axis and the central area including the optical axis are provided. In Numerical Example 1, the central area and the two zone area whose peripheries are defined by a circle are provided, and the surfaces of the areas are defined by three kinds of aspheric formulas respectively. Origin positions on the optical axis, which are of the center of a reference spherical surface of the aspherical surface, differ from one another, but the origin positions are shifted from one another. The shift amount is referred to as center shift amount $d_j$. j is an identification number of the central area and the zone area around the central area. The central area is set at the number of 1, and the numbers are assigned in the order from the inside. The center shift amount $d_j$ is determined based on the origin on the optical axis of the central area. That is, $d_0 = 0$.

The second, third, and fifth surfaces which are of the single aspheric surface are an optical axis symmetric rotation surface in which the following quadratic curve is rotated about the optical axis.

$$h = \sqrt{x^2 + y^2}$$

$$c = \frac{1}{R}$$

$$Z = \frac{ch^2}{1 + \sqrt{1 - (1+k)c^2 h^2}} + \sum_{i=1}^{m} A_i h^i$$

where z is the optical axis, x and y are an coordinate of a surface perpendicular to the optical axis, k is a constant defining a profile of the quadratic curve, c is a central curvature, and A is an correction coefficient.

The central area of the astigmatism correction surface or the aspheric surface of the zone area j in the fourth surface can be expressed by the following formula.

$$h = \sqrt{x^2 + y^2}$$

$$c_j = \frac{1}{R_j}$$

$$Z_j = \frac{c_j h^2}{1 + \sqrt{1 - (1+k_j)c_j^2 h^2}} + \sum_{i=1}^{m} A_{ij} h^i + d_j$$

It is also possible that other formulas can be used as the formula expressing the surface as required. The definitions of the aspheric surface in the following Numerical Examples are similar to Numerical Example 1.

The inclination of the surface at the boundary portion between at least one zone area and the central area is determined as a function of the angle of the light beam passing through the boundary portion. The influence of discontinuity of the step on aberration can be reduced by bringing the inclination of the surface close to the angle the light beam passing through the boundary portion.

A diffractive optical element (diffractive grating, DOE) which corrects chromatic aberration is provided in the fifth surface, i.e. the outgoing plane of the second lens 2. In the diffractive optical element, the step is provided such that an optical path difference of one wavelength is generated between the adjacent ring zones of the diffractive optical element, and the profile of the diffractive optical element is designed to have a pitch which is determined so as to obtain a diffraction angle according to an optical path difference function. Chromatic aberration can be corrected by utilizing an effect of negative Abbe number which is owned by the diffractive optical element.

$$\Phi = C2r^2 + C4r^4 + C6r^6 + C8r^8$$

At this point, the glass plate 4 is used as an alternative to an infrared cutoff filter.

(Numerical Example A)

As shown in Fig. 7, in Numerical Example A, the imaging optical system includes the two lenses and the glass plate like Numerical Example 1. The light incident from the object through an aperture reaches a sensor surface through the first lens 1, the second lens 2, and the glass plate 4. The incident plane and the outgoing plane of the first lens 1, the incident plane and the outgoing plane of the second lens 2, and the incident plane and the outgoing plane of the glass plate 4 are referred to as second surface to fifth surface, eighth surface, and ninth surface respectively. The second to fifth surfaces are defined by the single aspherical formula. The diffractive optical element (diffractive grating, DOE) which corrects chromatic aberration is provided in the fifth surface, i.e. the outgoing plane of the second lens 2.
When the aberration view of Numerical Example 1 shown in Fig. 2 is compared to the aberration view of Numerical Example A shown in Fig. 8, both the meridional image surface and the sagittal image surface fall in near the image surface in the case of Fig. 2 while the sagittal image surface has the large aberration around the image height of 2 mm in the case of Fig. 8. For distortion, the large difference cannot be observed between Figs. 2 and 8.

(Numerical Example 2)

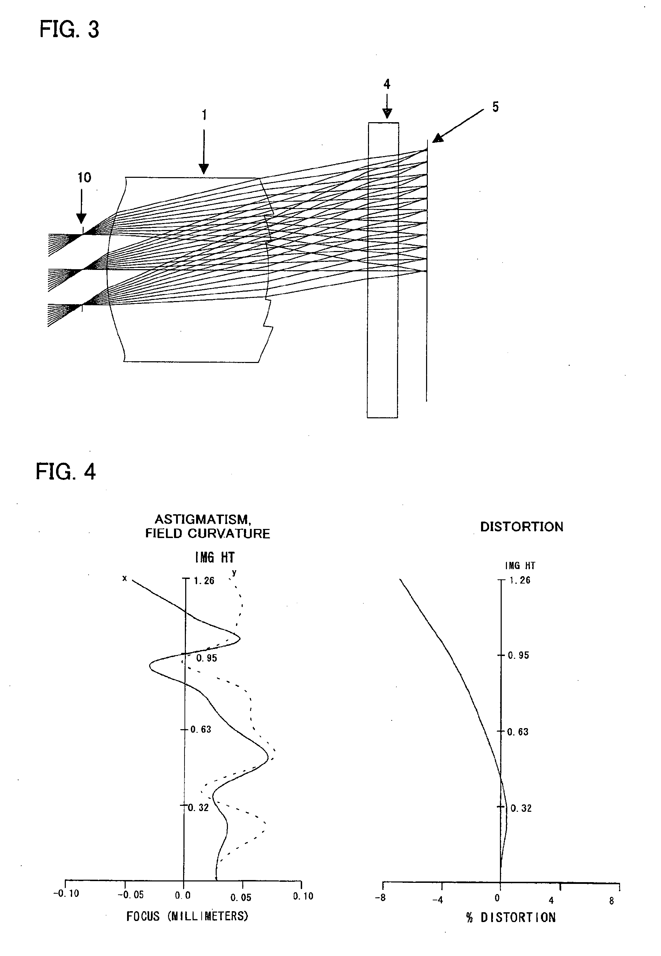

As shown in Fig. 3, in Numerical Example 2, the imaging optical system includes one lens and the glass plate. The light incident from the object through the aperture reaches the sensor surface 5 through a first lens 1 and a glass plate 4. The incident plane and the outgoing plane of the first lens 1 and the incident plane and the outgoing plane of the glass plate 4 are referred to as second surface to fifth surface respectively. The second surface is defined by the single aspheric formula. The third surface, i.e. the outgoing plane of the first lens 1 is the astigmatism correction surface, i.e. the surface in which at least one zone area surrounding the optical axis and the central area including the optical axis are provided. In Numerical Example 2, the central area and the two zone areas whose peripheries are defined by circles are provided, and the surfaces of the areas are defined by the three kinds of aspheric formulas respectively. The origin positions on the optical axis, which are of the center of each aspherical formula, differ from one another.

(Numerical Example B)

In Numerical Example B, the imaging optical system includes one lenses and the glass plate like Numerical Example 2. The light incident from the object through the aperture reaches the sensor surface 5 through a first lens 1 and a glass plate 4. The incident plane and the outgoing plane of the first lens 1 and the incident plane and the outgoing plane of the glass plate 4 are referred to as second surface to fifth surface respectively The second and third surfaces are defined by the single aspherical formula. The third surface includes DOE.
The aberration view of Numerical Example 2 shown in Fig. 4 is compared to the conventional aberration view of Numerical Example B shown in Fig. 9. In the conventional case of Fig. 9, the sagittal image surface is rapidly increased from near the image height of 1 mm as the image height is increased. The meridional image surface is increased while having a peak near the image height of 0.5 mm. On the contrary, in the case of the invention of Fig. 4, both the meridional image surface and the sagittal image surface fall in near the image surface. For the distortion, the large difference cannot be observed between Figs. 4 and 9.

(Numerical Example 3)

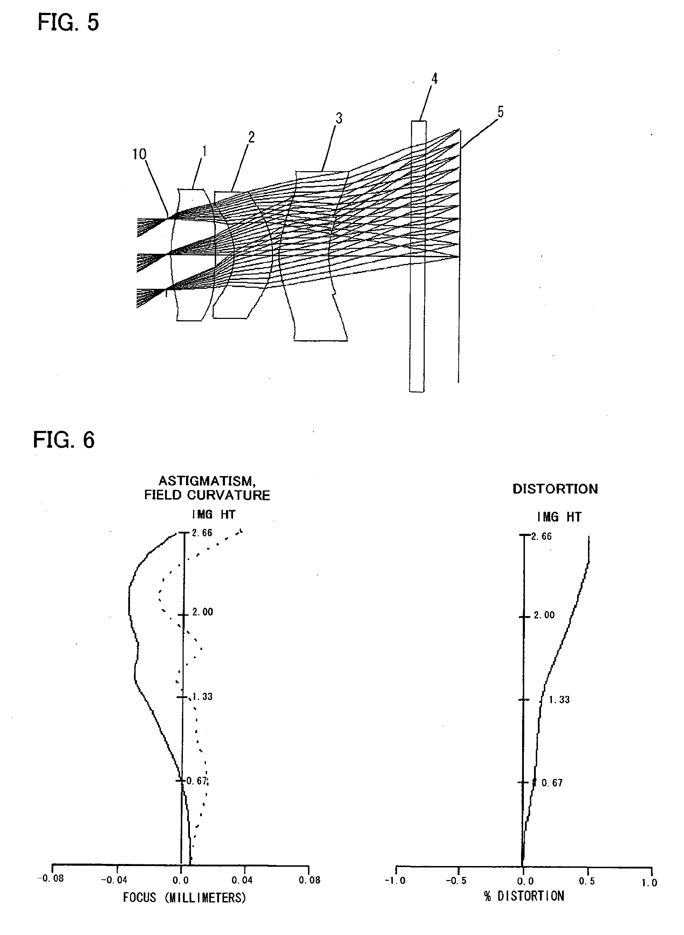

As shown in Fig. 5, in Numerical Example 3, the imaging optical system includes the three lenses and the glass plate. The light incident from the object through the aperture reaches the sensor surface 5 through a first lens 1, a second lens 2, a third lens 3, and a glass plate 4. The incident plane and the outgoing plane of the first lens 1, the incident plane and the outgoing plane of the second lens 2, the incident plane and the outgoing plane of the third lens 3, and the incident plane and the outgoing plane of the glass plate 4 are referred to as second surface to ninth surface respectively. The second to sixth surfaces are defined by the single aspherical formula. The seventh surface, i.e. the outgoing plane of the third lens 3 is the astigmatism correction surface, i.e. the surface in which at least one zone area surrounding the optical axis and the central area including the optical axis are provided. In Numerical Example 3, the central area and the one zone area whose periphery is defined by the circle are provided, and the surfaces of the areas are defined by the two kinds of aspheric formulas respectively. The points (origins) on the optical axis, which are of the center of the aspherical formulas, are shifted from each other. The shift amount is referred to as center shift amount. The diffractive optical element (diffractive grating, DOE) which corrects chromatic aberration is provided in the fifth surface, i.e. the outgoing plane of the second lens 2.

(Numerical Example C)

As with Numerical Example 3, the imaging optical system includes three lenses and a glass plate in Numerical Example C. The light incident from the object through the aperture reaches the sensor surface 5 through the first lens 1, the second lens 2, the third lens 3, and the glass plate 4. The incident plane and the outgoing plane of the first lens 1, the incident plane and the outgoing plane of the second lens 2, the incident plane and the outgoing plane of the third lens 3, and the incident plane and the outgoing plane of the glass plate 4 are referred to as second surface to ninth surface respectively. The second to seventh surfaces are defined by the single aspherical formula. The diffractive optical element (diffractive grating, DOE) which corrects chromatic aberration is provided in the fifth surface, i.e. the outgoing plane of the second lens 2.

The aberration view of Numerical Example 3 shown in Fig. 6 is compared to the conventional aberration view of Numerical Example C shown in Fig. 10. In the conventional case of Fig. 10, the aberration of the sagittal image surface is increased while having the peak around the image height of 2 mm. On the contrary, in the case of the invention of Fig. 6, the aberration of the sagittal image surface has the relatively small peak. For the distortion, the large difference cannot be observed between Figs. 6 and 10.

(Numerical Example 4)

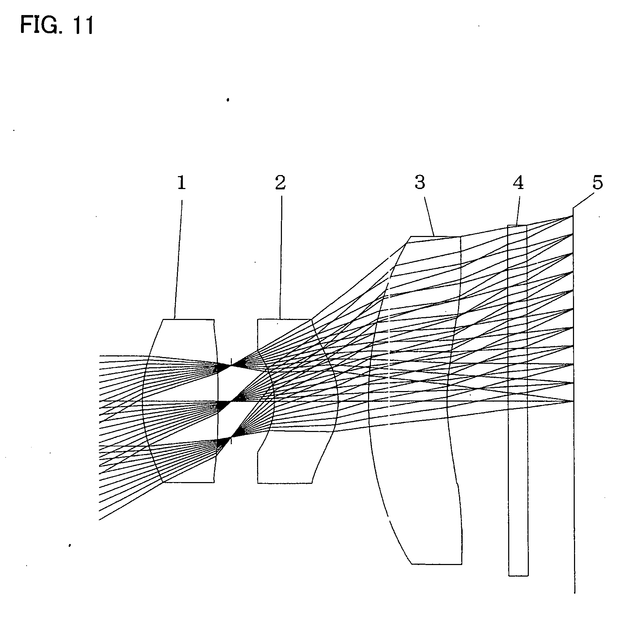

As shown in Fig. 11, in Numerical Example 4, the imaging optical system includes three lenses and a glass plate. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to sixth surfaces are defined by the single aspherical formula. The seventh surface, i.e. the outgoing plane of the third lens 3 is an astigmatism correction surface, i.e. the surface in which at least one zone area surrounding the optical axis and the central area including the optical axis are provided. In Numerical Example 4, the central area and the one zone area whose periphery is defined by the circle are provided, and the surfaces of the areas are defined by the two kinds of aspheric formulas respectively. The points (origins) on the optical axis, which are of the center of the aspherical formulas, are shifted from each other. The shift amount is referred to as center shift amount. In a table of Numerical Example 4, the center shift amount is indicated by $d_j$. The diffractive optical element (diffractive grating, DOE) which corrects chromatic aberration is provided in the fifth surface, i.e. the outgoing plane of the second lens 2.

(Numerical Example D)

As with Numerical Example 4, the imaging optical system includes three lenses and a glass plate in Numerical Example D. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to seventh surfaces are defined by the single aspherical formula.

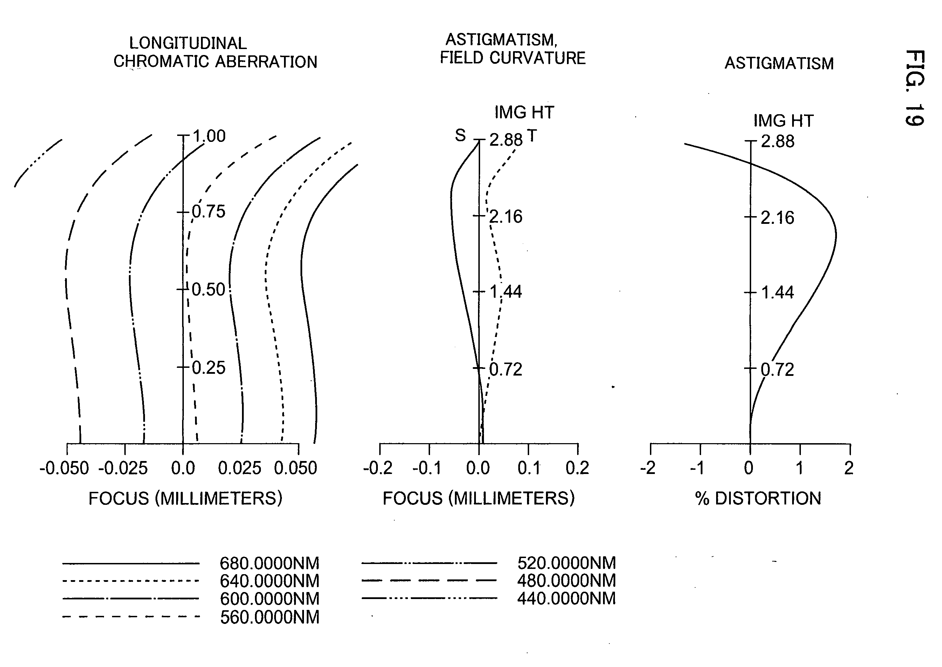

The aberration view of Numerical Example 4 shown in Fig. 12 is compared to the conventional aberration view of Numerical Example D shown in Fig. 19. In the case of the invention of Fig. 12, both the field curvature and the astigmatism have smaller values when compared with the conventional case of Fig. 19.

(Numerical Example 5)

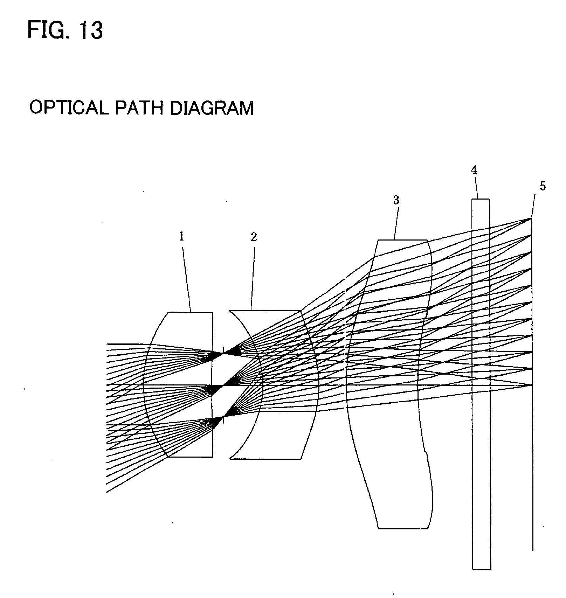

As shown in Fig. 13, in Numerical Example 5, the imaging optical system includes three lenses and a glass plate. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to sixth surfaces are defined by the single aspherical formula. The seventh surface, i.e. the outgoing plane of the third lens 3 is an astigmatism correction surface, i.e. the surface in which at least one zone area surrounding the optical axis and the central area including the optical axis are provided. In Numerical Example 5, the central area and the one zone area whose periphery is defined by the circle are provided, and the surfaces of the areas are defined by the two kinds of aspheric formulas respectively. The points (origins) on the optical axis, which are of the center of the aspherical formulas, are shifted from each other. The shift amount is referred to as center shift amount. In the table of Numerical Example 5, the center shift amount is indicated by $d_j$.

In Numerical Example 5, although the Abbe numbers of the first lens and the third lens are equal to each other, the Abbe number of the second lens differs from the Abbe numbers of the first lens and the third lens. The focal distances of the first to third lenses are shown in the following Table 1.

Table 1

|  | Focal distance |
|---|---|
| First lens | 4.57 |
| Second lens | -35.23 |
| Third lens | 21.81 |

As is well known, longitudinal chromatic aberration can be decreased by properly selecting focal distances and Abbe numbers of the plural lenses. Specifically the negative focal distance is given to any one of the first to third lenses, and the Abbe number of the lens having the negative focal distance is lessened when compared with other lenses. In Numerical Example 5, the negative focal distance is given to the second lens, and the Abbe number of the second lens is lessened when compared with the first and third lenses.

(Numerical Example E)

As with Numerical Example 5, the imaging optical system includes three lenses and a glass plate in Numerical Example 5. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to seventh surfaces are defined by the single aspherical formula.

Like Numerical Example 5, in Numerical Example E, the Abbe number of the second lens is different from the Abbe numbers of the first lens and the third lens while the Abbe numbers of the first lens and the third lens are equal to each other.

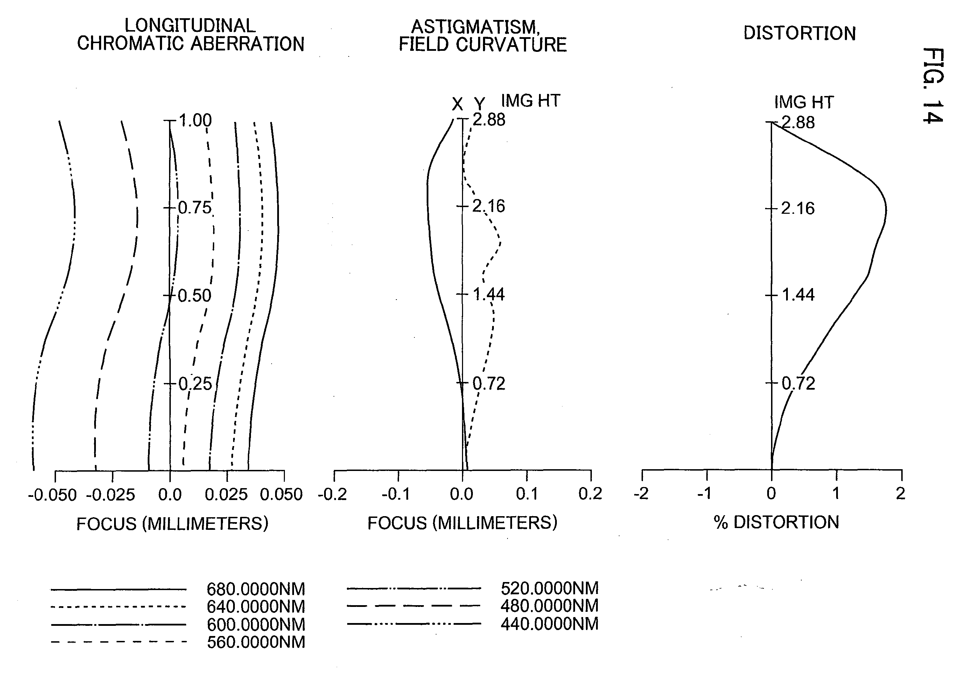

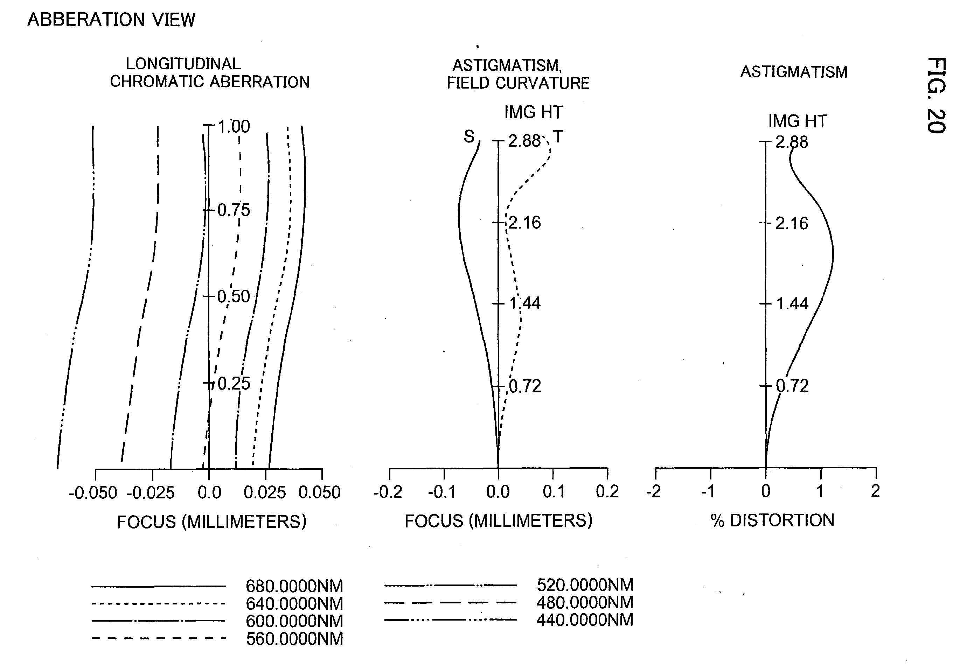

The aberration view of Numerical Example 5 shown in Fig. 14 is compared to the conventional aberration view of Numerical Example E shown in Fig. 20. In the case of the invention of Fig. 14, both the field curvature and the astigmatism have smaller values when compared with the conventional case of Fig. 20. Further, the aberration view of Numerical Example 5 shown in Fig. 14 is compared to the aberration view of Numerical Example 4 shown in Fig. 12. As with Numerical Example 4 in which the DOE surface is used, the longitudinal chromatic aberration is decreased in Numerical Example 5.

(Numerical Example 6)

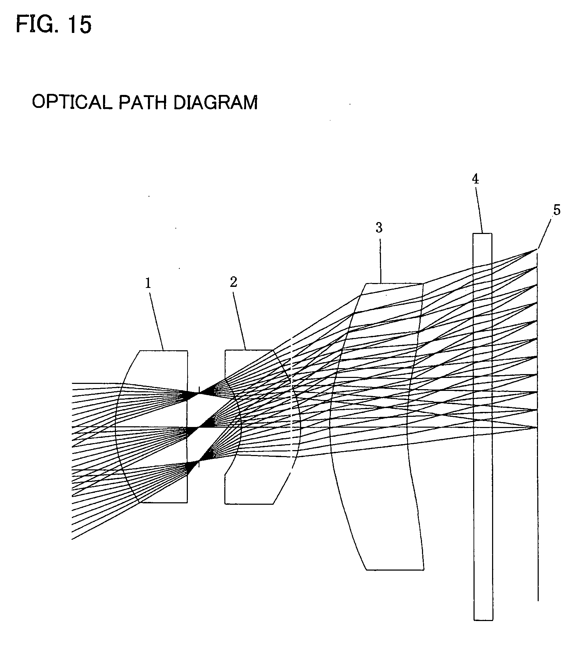

As shown in Fig. 15, in Numerical Example 6, the imaging optical system includes three lenses and a glass plate. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to sixth surfaces are defined by the single aspherical formula. The seventh surface, i.e. the outgoing plane of the third lens 3 is an astigmatism correction surface, i.e. the surface in which at least one zone area surrounding the optical axis and the central area including the optical axis are provided. In Numerical Example 6, the central area and the one zone area whose periphery is defined by the circle are provided, and the surfaces of the areas are defined by the two kinds of aspheric formulas respectively. The points (origins) on the optical axis, which are of the center of the aspherical formulas, are shifted from each other. The shift amount is referred to as center shift amount. In the table of Numerical Example 6, the center shift amount is indicated by $d_j$.

In Numerical Example 6, although the Abbe numbers of the first lens and the third lens are equal to each other, the Abbe number of the second lens differs from the Abbe numbers of the first lens and the third lens. The focal distances of the first to third lenses are shown in the following Table 2.

Table 2

|  | Focal distance |
|---|---|
| First lens | 4.50 |
| Second lens | -64.09 |
| Third lens | 26.91 |

As is well known, the longitudinal chromatic aberration can be decreased by properly selecting focal distances and Abbe numbers of the plural lenses. Specifically the negative focal distance is given to any one of the first to third lenses, and the Abbe number of the lens having the negative focal distance is lessened when compared with other lenses. In Numerical Example 6, the negative focal distance is given to the second lens, and the Abbe number of the second lens is lessened when compared with the first and third lenses.

In Numerical Example 6, the diffractive optical element (diffractive grating, DOE) which corrects chromatic aberration is further provided in the fifth surface, i.e. the outgoing plane of the second lens 2. When a combination of DOE and the method of using the lenses having different Abbe numbers is utilized, a degree of freedom is increased in design, because a target amount of achromatic correction can be dispersed in DOE and the method.

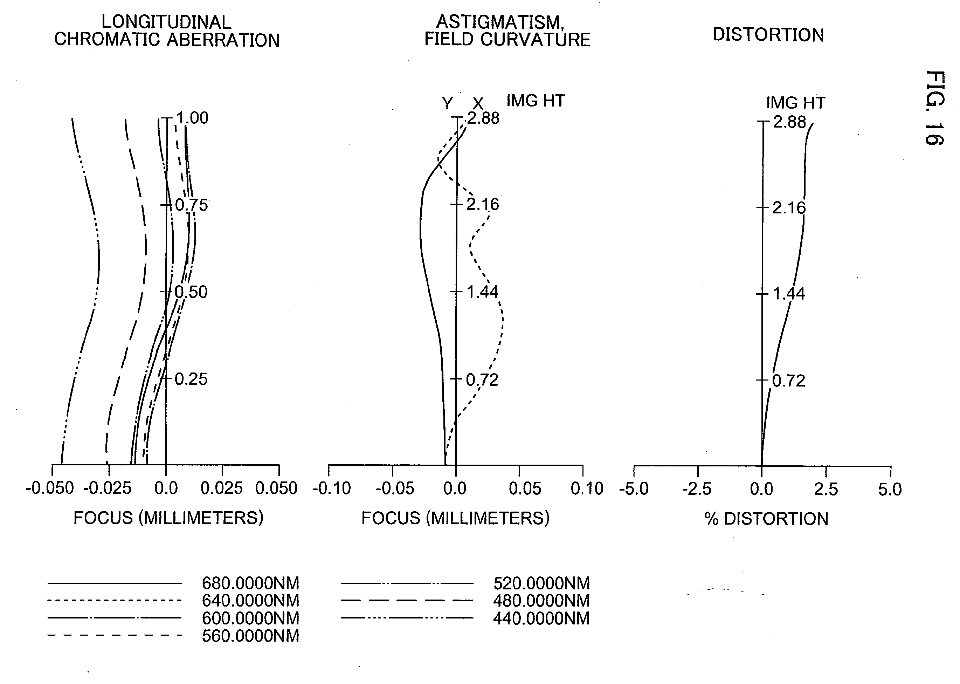

The aberration view of Numerical Example 6 shown in Fig. 16 is compared to the conventional aberration view of Numerical Example E shown in Fig. 20. In the case of the invention of Fig. 16, both the field curvature and the astigmatism have smaller values when compared with the conventional case of Fig. 20. The longitudinal chromatic aberration in Numerical Example 6 is smaller when compared with both the longitudinal chromatic aberration in Numerical Example 4 shown in Fig. 12 in which DOE is used for compensation and the longitudinal chromatic aberration in Numerical Example 5 shown in Fig. 14 in which the lenses having different Abbe numbers are used for compensation.

(Numerical Example 7)

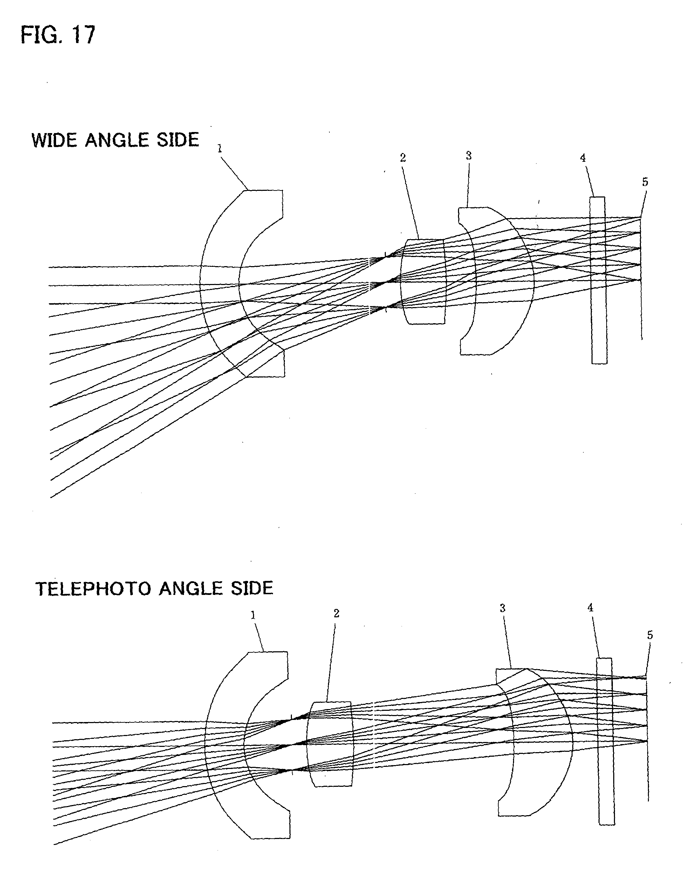

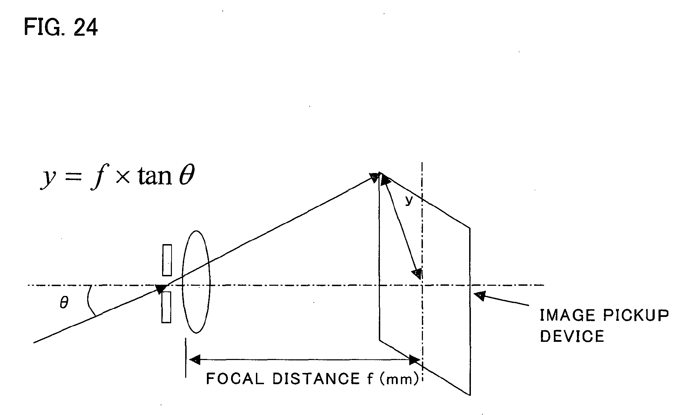

As shown in Fig. 17, a lens drive type zoom imaging lens is a target of Numerical Example 7. As shown in Fig. 24, assuming that the image height is y (mm), the angle of view is θ (degree), and the focal distance is f (mm), the following formula holds in the imaging lens.

$$y = f \times \tan\theta$$

When a size of the image pickup device (sensor) is not changed, the change in focal distance changes the angle of view. That is, the angle of view is decreased when the focal distance is increased (telephoto side), and the angle of view is increased when the focal distance is decreased (wide angle side). The method in which the angle of view is changed by changing the focal distance is referred to as optical zoom type.

In Numerical Example 7, the imaging optical system includes three lenses and a glass plate. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to sixth surfaces are defined by the single aspherical formula. The seventh surface, i.e. the outgoing plane of the third lens 3 is the astigmatism correction surface, i.e. the surface in which at least one zone area surrounding the optical axis and the central area including the optical axis are provided. In Numerical Example 7, the central area and the one zone area whose periphery is defined by the circle are provided, and the surfaces of the areas are defined by the two kinds of aspheric formulas respectively The points (origins) on the optical axis, which are of the center of the aspherical formulas, are shifted from each other. The shift amount is referred to as center shift amount. In the table of Numerical Example 7, the center shift amount is indicated by $d_j$. The diffractive optical element (diffractive optical element, DOE) which corrects the chromatic aberration is provided in the fifth surface, i.e. the outgoing plane of the second lens 2.

The switch is performed between the telephoto side and the wide angle side by moving the second lens and the third lens in the optical axis direction.

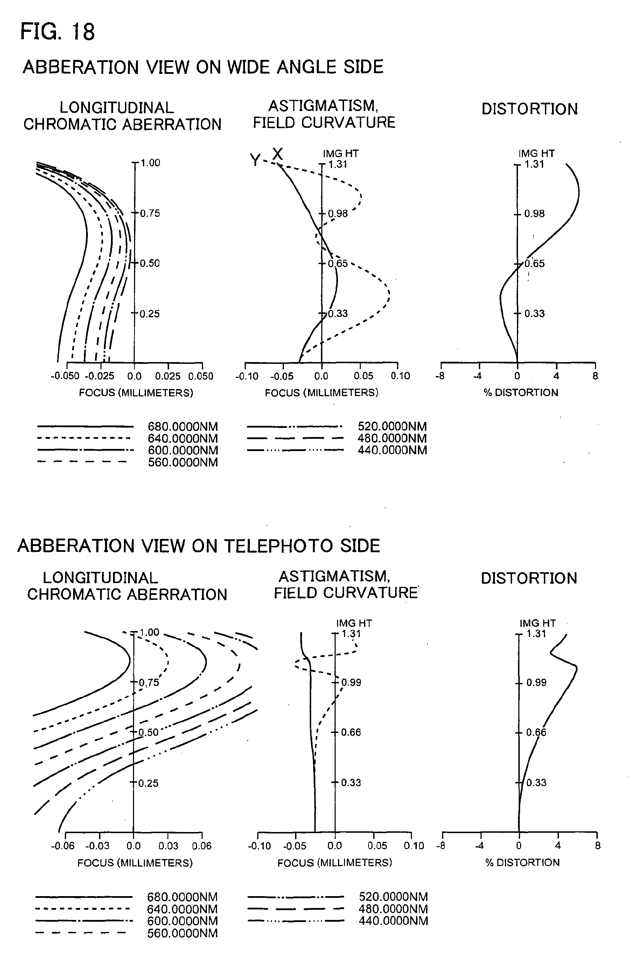

Fig. 18 shows the aberration view of Numerical Example 7.

(Numerical Example F)

As with Numerical Example 7, the imaging optical system includes three lenses and a glass plate in Numerical Example F. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to seventh surfaces are defined by the single aspherical formula.

Like Numerical Example 7, the switch is performed between the telephoto side and the wide angle side by moving the second lens and the third lens in the optical axis direction.

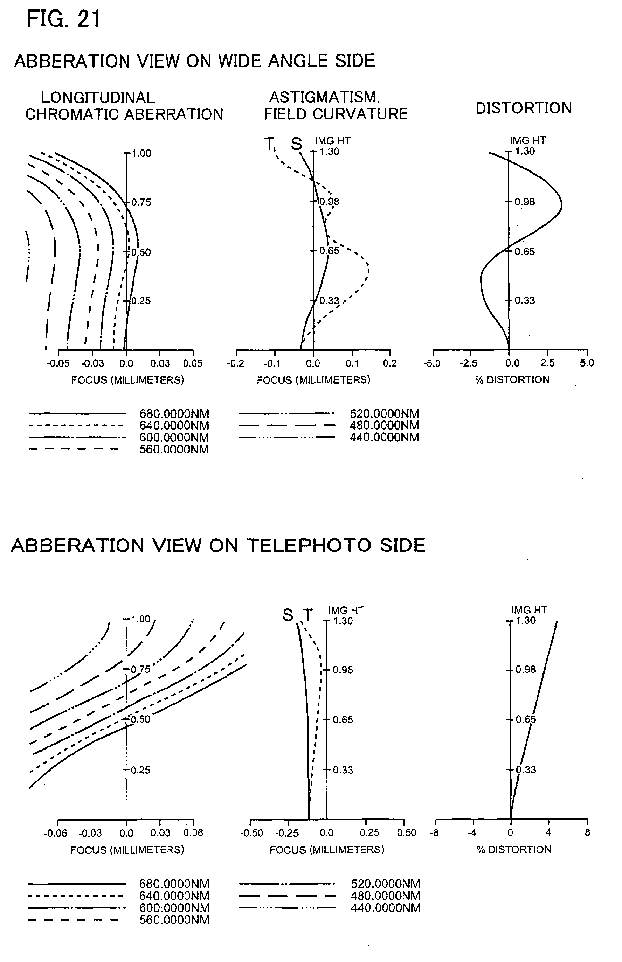

The aberration view of Numerical Example 7 shown in Fig. 18 is compared to the conventional aberration view of Numerical Example F shown in Fig. 21. In the case of the invention of Fig. 18, particularly in the wide angle side, both the field curvature and the astigmatism have smaller values when compared with the conventional case of Fig. 21.

(Numerical Example 8)

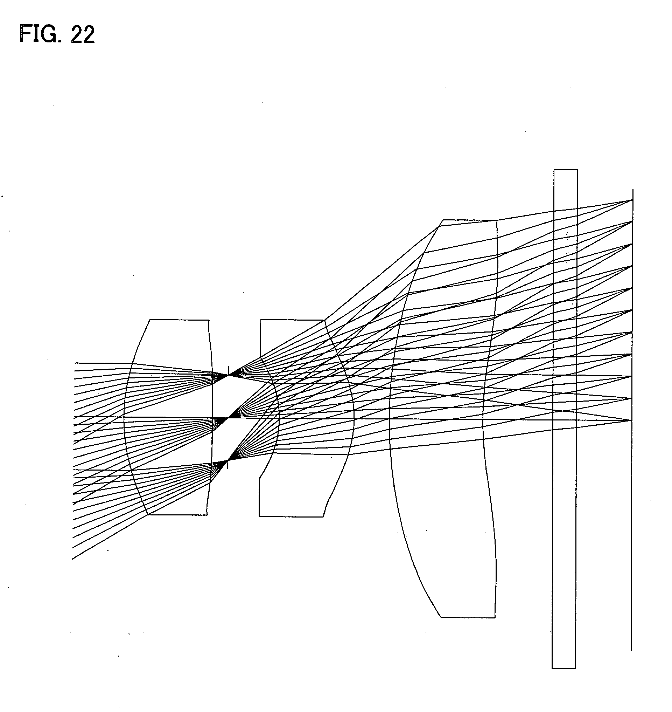

As shown in Fig. 22, in Numerical Example 8, the imaging optical system includes three lenses and a glass plate like Numerical Example 7. The light incident from the object reaches the sensor surface (image surface) 5 through the first lens 1, the aperture surface, the second lens 2, the third lens 3, and the glass plate 4. The incident plane and the outgoing plane of the first lens 1 are referred to as first surface and second surface respectively. The incident plane and the outgoing plane of the second lens 2, the incident plane and the outgoing plane of the third lens 3, and the incident plane and the outgoing plane of the glass plate 4 are referred to as fourth surface to ninth surface respectively. The first surface, the second surface, and the fourth to sixth surfaces are defined by the single aspherical formula. The seventh surface, i.e. the outgoing plane of the third lens 3 is the astigmatism correction surface, i.e. the surface in which at least one zone area surrounding the optical axis and the central area including the optical axis are provided. In Numerical Example 8, the central area and the one zone area whose peripheries are defined by circles are provided, and the surfaces of the areas are defined by the two kinds of aspheric formulas respectively. The points (origins) on the optical axis, which are of the center of the aspherical formulas, are shifted from each other. The shift amount is referred to as center shift amount. In the table of Numerical Example 8, the center shift amount is indicated by $d_j$. In Numerical Example 8, the step in the optical axis direction is defined in the boundary between the central area and the zone area so as to satisfy the following formula:

$$1 < \lambda/(n - 1)$$

where $\lambda$ is the wavelength of the light and n is the refractive index of the lens. Specifically the step amount in the optical axis direction is 0.000061 mm in the boundary between the central area and the zone area. Thus, the step reflected into the image can be eliminated and the optical interference caused by the step can be suppressed. The diffractive optical element (diffractive optical element, DOE) which corrects the chromatic aberration is provided in the fifth surface, i.e. the outgoing plane of the second lens 2.

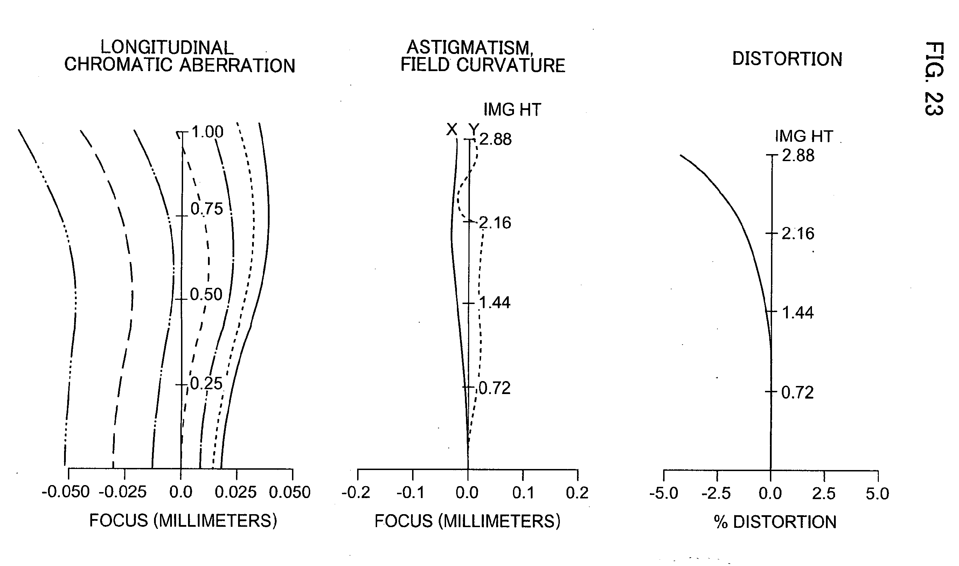

The aberration view of Numerical Example 8 shown in Fig. 23 is compared to the conventional aberration view of Numerical Example D shown in Fig. 19. As with Numerical Example 4 shown in Fig. 12, in the case of the invention of Fig. 23, both the field curvature and the astigmatism have smaller values when compared with the conventional case of Fig. 19.

In Numerical Example 4, the step amount in the optical axis direction is 0.018 mm in the boundary between the central area and the zone area. In Numerical Example 8, the image-side surface of the third lens has an inflection point such that the step amount is decreased to the above step amount of 0.018 mm. Because the third lens of Numerical Example 4 does not have the inflection point in the image-side surface, lens handling becomes easier in the production process when compared with the third lens of Numerical example 8.

According to the invention, when compared with the conventional art, the field curvature or the astigmatism can further be decreased by adding parameters of the number of zone areas surrounding the optical axis and the positions of the zone areas, the surface profile of each area, and the center shift amount, in addition to the conventional parameters.

It is to be noted that the imaging optical element of the invention can even be made of a plastic material. It is said that the plastic material has a disadvantage for aberration correction because the refractive index and the dispersion value are not widely changed.

Although the above examples are described while the lens is used as an example of the imaging optical element, the invention can also be applied to other imaging elements such as a mirror. For example, it is possible that the curvature is given to a mirror portion of the scanner and the light is collected by providing the imaging optical system of the invention, or it is possible that the imaging optical system of the invention is provided in the mirror of the scanning optical system.

Numerical Examples of the invention will specifically be shown below. Hereinafter both the central area and the zone areas are denoted as ring zones. The F number is denoted as Fno.

Numerical Example 1

Fno. = 2.7, Focal distance = 3.499 mm

| Surface number | Remarks | Surface distance (mm) | Surface profile |
|---|---|---|---|
| Object surface | Object | 500 | |
| Aperture surface | Aperture | 0.1 | |
| Second surface | First lens | 0.863 | Aspheric surface |
| Third surface | First lens | 0.349 | Aspheric surface |
| Fourth surface | Second lens | 1.245 | Astigmatism correction surface |
| Fifth surface | Second lens | 1.06 | DOE surface |
| Eighth surface | Glass plate | 0.3 | |
| Ninth surface | Glass plate | 0.74 | |
| Image surface | Sensor surface | | |

| Aspheric profile | | | |
|---|---|---|---|
| Aspheric coefficient | Second surface | Third surface | Fifth surface |
| R | 1.473 | 1.605 | -9.224 |
| K | 0 | 0 | 0 |
| A4 | -0.3160E-01 | -0.2545E-01 | 0.2453E-01 |
| A6 | 0.3599E-01 | 0.7511E-02 | -0.7399E-02 |
| A8 | -0.1967E-01 | 0.6067E-01 | -0.2350E-02 |
| A10 | 0 | -0.2344E-01 | 0.6771E-04 |

| Second-lens fifth-surface optical path difference function coefficient | |
|---|---|
| | Fifth surface |
| C2 | -0.1425E-01 |

(continued)

| Second-lens fifth-surface optical path difference function coefficient | |
|---|---|
| | Fifth surface |
| C4 | 0.5566E-02 |
| C6 | -0.1545E-04 |

Astigmatism correction surface profile (each ring zone:j)

| (Central step amount d in each ring zone) | | | |
|---|---|---|---|
| Surface coefficient | j=1 | j=2 | j=3 |
| Surface innermost radius | 0 | 0.35 | 0.55 |
| Dj | 0 | 0.054 | 0.095 |
| Rj | 3.055 | 0.054 | 3.117 |
| kj | 0 | 0 | 0 |
| A4j | -0.1749E-01 | -0.2008E-02 | -0.6787E-02 |
| A6j | 0.1426 | -0.6198E-01 | -0.1878E-01 |
| A8j | -0.9036 | 0.6343-01 | -0.3700E-03 |
| A10j | 0 | 0 | 0 |

Numerical Example A

Fno. = 2.7, Focal distance = 3.514 mm

| Surface number | Remarks | Surface distance (mm) | Surface profile |
|---|---|---|---|
| Object surface | Object | 500 | |
| Aperture surface | Aperture | 0.1 | |
| Second surface | First lens | 0.863 | Aspheric surface |
| Third surface | First lens | 0.428 | Aspheric surface |
| Fourth surface | Second lens | 1.188 | Aspheric surface |
| Fifth surface | Second lens | 1.05 | DOE surface |
| Eighth surface | Glass plate | 0.3 | |
| Ninth surface | Glass plate | 0.74 | |
| Image surface | Sensor surface | | |

| Aspheric profile | | | | |
|---|---|---|---|---|
| Aspheric coefficient | Second surface | Third surface | Fourth Surface | Fifth surface |
| R | 1.473 | 1.605 | 2.861 | -15.788 |
| K | 0 | 0 | 0 | 0 |
| A4 | -0.3160E-01 | -0.2545E-01 | -0.1233E-01 | 0.1974E-01 |
| A6 | 0.3599E-01 | 0.7511E-02 | -0.2533E-01 | -0.1060E-01 |

(continued)

| Aspheric profile | | | | |
|---|---|---|---|---|
| Aspheric coefficient | Second surface | Third surface | Fourth Surface | Fifth surface |
| A8 | -0. 1967E.01 | 0.6067E-01 | 0.5044E-2 | -0.1637E-02 |
| A10 | 0 | -0.2344E-01 | 0 | 0.3052E-03 |

Numerical Example 2

Fno. = 2.8, Focal distance = 2.050

| Surface number | Remarks | Surface distance (mm) | Surface profile |
|---|---|---|---|
| Object surface | Object | 500 | |
| Aperture surface | Aperture | 0.25 | |
| Second surface | First lens | 1.65 | Aspheric surface |
| Third surface | First lens | 1.0 | astigmatism correction surface |
| Fourth surface | Glass plate | 0.3 | |
| Fifth surface | Glass plate | 0.3 | |
| Image surface | Sensor surface | | |

| Aspheric profile | |
|---|---|
| Aspheric coefficient | Second surface |
| R | 2.097 |
| K | -2.427 |
| A4 | 0.6389E-01 |
| A6 | -0.5471E-01 |
| A8 | 0.1585 |
| A10 | -0.2322 |

| Astigmatism correction surface profile | | | |
|---|---|---|---|
| Surface coefficient | First surface | Second surface | Third surface |
| Surface innermost radius | 0 | 0.3101 | 0.5851 |
| Dj | 0 | 0.05935 | 0.1488 |
| Rj | -1.448 | -1.523 | -2.249 |
| Kj | -9.166 | -10.185 | -6.353 |
| A4j | -0.1384 | -0.2941 | -0.3463 |
| A6j | 1.3600 | 0.4276 | 0.5055 |
| A8j | -40.7482 | -0.1647 | -0.3343 |
| A10j | 235.5219 | -0.2145 | 0.1000 |

Numerical Example B

Fno. = 2.8, Focal distance =1.96 (mm)

| Optical configuration | | | | | |
|---|---|---|---|---|---|
| Surface number | Remarks | Surface distance (mm) | Dispersion value (Abbe number) | Refractive index | Surface profile |
| Object surface | Object | 500 | 0 | 1 | |
| Aperture surface | Aperture | 0.25 | 0 | 1 | |
| Second surface | First lens | 1.65 | 56.74 | 1.494 | Aspheric surface |
| Third surface | First lens | 1.0 | 0 | 1 | DOE surface |
| Fourth surface | Glass plate plate | 0.3 | 64.17 | 1.518 | |
| Fifth surface | Glass plate | 0.3 | 0 | 1 | |
| Image surface | | | | | |

| Aspheric surface | | |
|---|---|---|
| Aspheric coefficient | Second surface | Third surface |
| R | 2.428 | -1.361 |
| K | -0.371 | -10.284 |
| A4 | -9.6995E-03 | -2.4687E-01 |
| A6 | 1.0087E-01 | 2.6208E-01 |
| A8 | -1.5045E-01 | -1.3874E-01 |
| A10 | 2.0026E-02 | 4.0346E-02 |

| Optical path difference function coefficient | |
|---|---|
| Aspheric coefficient | Second surface |
| C2 | -1.6825E-02 |
| C4 | -1.1202E-02 |
| C6 | 1.9336E-02 |
| C8 | -1.1003E-02 |

Numerical Example 3

Fno. = 2.8, Focal distance = 4.157

| Optical configuration | | | |
|---|---|---|---|
| Surface number | Remarks | Surface distance (mm) | Surface profile |
| Object surface | Object | 900 | |
| Aperture surface | Aperture | 0.1 | |
| Second surface | First lens | 0.912 | Aspheric surface |

(continued)

| Optical configuration | | | |
|---|---|---|---|
| Surface number | Remarks | Surface distance (mm) | Surface profile |
| Third surface | First lens | 0.400 | Aspheric surface |
| Fourth surface | Second lens | 0.776 | Aspheric surface |
| Fifth surface | Second lens | 0.134 | DOE surface |
| Sixth surface | Third lens | 1.000 | Aspheric surface |
| Seventh surface | Third lens | 1.639 | Astigmatism correction surface |
| Eighth surface | Glass plate | 0.3 | |
| Ninth surface | Glass plate | 0.74 | |
| Image surface | Sensor surface | | |

| Aspheric profile | | | | | |
|---|---|---|---|---|---|
| Aspheric coefficient | Second surface | Third surface | Fourth surface | Fifth surface | Sixth surface |
| R | 3.175 | -26.831 | -1.306 | -1.640 | 1.962 |
| K | 0 | 0 | 0 | 0 | 0 |
| A4 | -0.1783E-01 | -0.3550E-01 | 0.1079 | 0.1708E-01 | -0.7416E-01 |
| A6 | -0.7402E-03 | -0.3702E-01 | -0.9719E-01 | -0.2454E-02 | 0.9214E-02 |
| A8 | -0.9385E-02 | 0.1193E-01 | 0.8431E-01 | 0.1289E-01 | -0.3657E-02 |
| A10 | 0 | 0 | 0 | 0.5059E-03 | 0 |

| Second-lens fifth-surface optical path difference function coefficient | |
|---|---|
| | Fifth surface |
| C2 | 0.7724E-02 |
| C4 | -0.1301E-02 |
| C6 | 0.5826E-03 |

| Astigmatism correction surface profile | | |
|---|---|---|
| Surface coefficient | j=1 | j=2 |
| Surface innermost radius | 0 | 0.80 |
| dj | 0 | -0.06 |
| Rj | 2.057 | 2.112 |
| kj | 0 | 0 |
| A4j | -0.4089E-01 | -0.3998E-01 |
| A6j | -0.1212E-01 | -0.3757E-02 |
| A8j | 0.1367E-01 | 0.6548E-03 |
| A10j | -0.7024E-02- | -0.1981E-03 |

Numerical Example C

Fno. = 2.8, Focal distance = 4.15 (mm)

| Optical configuration | | | | | |
|---|---|---|---|---|---|
| Surface number | Remarks | Surface distance (mm) | Dispersion value (Abbe number) | Refractive index | Surface profile |
| Object surface | Object | 900 | 0 | 1 | |
| Aperture surface | Aperture | 0.1 | 0 | 1 | |
| Second surface | First lens | 0.92 | 52.85 | 1.546 | Aspheric surface |
| Third surface | First lens | 0.4 | 0 | 1 | Aspheric surface |
| Fourth surface | Second lens | 0.78 | 52.85 | 1.546 | Aspheric surface |
| Fifth surface | Second lens | 0.13 | 0 | 1 | DOE surface |
| Sixth surface | Third lens | 1.0 | 52.85 | 1.546 | Aspheric surface |
| Seventh surface | Third lens | 1.64 | 0 | 1 | Aspheric surface |
| Eighth surface | Glass plate | 0.3 | 64.17 | 1.518 | |
| Ninth surface | Glass plate | 0,7 | 0 | 1 | |
| Image surface | | | | | |

| Aspheric profile | | | | | | |
|---|---|---|---|---|---|---|
| Aspheric coefficient | Second surface | Third surface | Fourth surface | Fifth Surface | Sixth surface | Seventh surface |
| R | 3.175 | -26.831 | -1.306 | -1.640 | 1.962 | 2.062 |
| K | 0.000 | 0.000 | 0.000 | 0.000 | 0.000 | 0.000 |
| A4 | -1.7825E-02 | -3.5500E-02 | 1.0791E-01 | 1.7077E-02 | -7.4160E-02 | -4.1757E-02 |
| A6 | -7.4017E-04 | -3.7025E-02 | -9.7194E-02 | -2.4545E-03 | 9.2144E-03 | -4.3381E-03 |
| A8 | -9.3846E-03 | 1.1925E-02 | 8.4313E-02 | 1.2895E-02 | -3.6571E-03 | 1.1449E-03 |
| A10 | 0.0000E+00 | 0.0000E+00 | 0.0000E+00 | 5.0588E-04 | 0.0000E+00 | -3.3252E-04 |

| Optical path difference function coefficient | |
|---|---|
| Aspheric coefficient | Fifth surface |
| C2 | -7.7241E-03 |
| C4 | 1.3012E-03 |
| C6 | -5.8259E-04 |

Numerical Example 4

Fno. = 3.5, focal distance = 4.9 (mm)

| Optical configuration | | | | | |
|---|---|---|---|---|---|
| Surface number | Remarks | Surface distance (mm) | Dispersion value (Abbe number) | Refractive index | Surface profile |
| Object surface | Object | 1200 | 0 | 1 | |

(continued)

| Optical configuration | | | | | |
|---|---|---|---|---|---|
| Surface number | Remarks | Surface distance (mm) | Dispersion value (Abbe number) | Refractive index | Surface profile |
| First surface | First lens | 1.14 | 52.85 | 1.546 | Aspheric surface |
| Second surface | First lens | 0.2 | 0 | 1 | Aspheric surface |
| Aperture surface | Aperture | 0.66 | 0 | 1 | |
| Fourth surface | Second lens | 0.94 | 52.85 | 1.546 | Aspheric surface |
| Fifth surface | Second lens | 0.45 | 0 | 1 | DOE surface |
| Sixth surface | Third lens | 1.2 | 52.85 | 1.546 | Aspheric surface |
| Seventh surface | Third lens | 0.91 | 0 | 1 | Astigmatism correction surface |
| Eighth surface | glass plate | 0.3 | 64.17 | 1.518 | |
| Ninth surface | glass plate | 0.7 | 0 | 1 | |
| Image surface | | | | | |

| Aspheric profile | | | | | |
|---|---|---|---|---|---|
| Aspheric coefficient | Second surface | Third surface | Fourth surface | Fifth surface | Sixth surface |
| R | 2.409 | -43.369 | -1.223 | -1.506 | 5.724 |
| K | 0 | 0 | 0 | 0 | 0 |
| A4 | -7.8709E-03 | -2.3163E-02 | 6.0064E-02 | 5.6082E-02 | -9.2468E-04 |
| A6 | 1.2644E-03 | -1.4715E-02 | 3.3630E-02 | 2.8995E-02 | 3.1645E-04 |
| A8 | -4.7514E-03 | -3.1645E-03 | 7.2581E-02 | 8.0468E-03 | 0.0000E+00 |
| A10 | 0.0000E+00 | 9.7319E-03 | -6.3905E-02 | 0.0000E+00 | 0.0000E+00 |

| Astigmatism correction surface profile | | |
|---|---|---|
| Surface coefficient | j=1 | j=2 |
| Surface innermost radius | 0.00 | 1.30 |
| dj | 0.00 | 0.03 |
| Rj | 3.772 | 4.804 |
| kj | 0 | 0 |
| A4j | -4.5022E-02 | -2.0288E-02 |
| A6j | 9.6590E-03 | 1.0616E-03 |
| A8j | -1.2577E-03 | 7.4542E-06 |
| A10j | 0.0000E+00 | 0.0000E+00 |

| Second-lens fifth-surface optical path difference function coefficient | |
|---|---|
| | Fifth surface |
| C2 | -6.9541E-03 |

(continued)

| Second-lens fifth-surface optical path difference function coefficient | |
|---|---|
| | Fifth surface |
| C4 | 1.0493E-02 |
| C6 | -5.7904E-03 |

Numerical Example D

Fno. = 3.5, Focal distance = 4.9 (mm)

| Optical configuration | | | | | |
|---|---|---|---|---|---|
| Surface number | Remarks | Surface distance (mm) | Dispersion value (Abbe number) | Refractive index | Surface profile |
| Object surface | Object | 1200 | 0 | 1 | |
| First surface | First lens | 1.17 | 52.85 | 1.546 | Aspheric surface |
| Second surface | First lens | 0.2 | 0 | 1 | Aspheric surface |
| Aperture surface | Aperture | 0.65 | 0 | 1 | |
| Fourth surface | Second lens | 0.98 | 52.85 | 1.546 | Aspheric surface |
| Fifth surface | Second lens | 0.38 | 0 | 1 | Aspheric surface |
| Sixth surface | Third lens | 1.2 | 52.85 | 1.546 | Aspheric surface |
| Seventh surface | Third lens | 0.92 | 0 | 1 | Aspheric surface |
| Eighth surface | Glass plate | 0.3 | 64.17 | 1.518 | |
| Ninth surface | Glass plate | 0.7 | 0 | 1 | |
| Image surface | | | | | |

| Aspheric profile | | | | | | |
|---|---|---|---|---|---|---|
| Aspheric coefficient | Second surface | Third surface | Fourth surface | Fifth Surface | Sixth surface | Sixth surface |
| R | 2.053 | 9.900 | -1.687 | -2.450 | 3.973 | 5.911 |
| K | 0 | 0 | 0 | 0 | 0 | 0 |
| A4 | 2.5436E-04 | -7.4178E-03 | 1.8687E-02 | 3.1196E-02 | -6.7846E-03 | -8.6485E-03 |
| A6 | -3.8387E-04 | 1.9203E-03 | -1.2545E-02 | 4.2876E-03 | 1.5758E-04 | -1.5268E-04 |
| A8 | -4.7728E-06 | 4.3270E-04 | -2.2988E-03 | 1.1396E-04 | -1.0963E-07 | 1.3142E-07 |
| A10 | 0.0000E+00 | 0.0000E+00 | 0.0000E+00 | 0.0000E+00 | 0.0000E+00 | 0.0000E+00 |

Numerical Example 5

Fno. = 3.5, Focal distance = 4.9

| Optical configuration | | | | | |
|---|---|---|---|---|---|
| Surface number | Remarks | Surface distance (mm) | Dispersion value (Abbe number) | Refractive index | Surface profile |
| Object surface | Object | 1200 | 0 | 1 | |

(continued)

| Optical configuration | | | | | |
|---|---|---|---|---|---|
| Surface number | Remarks | Surface distance (mm) | Dispersion value (Abbe number) | Refractive index | Surface profile |
| First surface | First lens | 1.14 | 62.35 | 1.511 | Aspheric surface |
| Second surface | First lens | 0.2 | 0 | 1 | Aspheric surface |
| Aperture surface | Aperture | 0.66 | 0 | 1 | |
| Fourth surface | Second lens | 0.94 | 29.29 | 1.588 | Aspheric surface |
| Fifth surface | Second lens | 0.45 | 0 | 1 | Aspheric surface |
| Sixth surface | Third lens | 1.2 | 62.35 | 1.511 | Aspheric surface |
| Seventh surface | Third lens | 0.91 | 0 | 1 | Astigmatism correction surface |
| Eighth surface | Glass plate | 0.3 | 64.17 | 1.518 | |
| Ninth surface | Glass plate | 0.7 | 0 | 1 | |
| Image surface | | | | | |

| Aspheric profile | | | | | |
|---|---|---|---|---|---|
| Aspheric coefficient | Second surface | Third surface | Fourth surface | Fifth surface | Sixth surface |
| R | 2.131 | 20.048 | -1.640 | -2.159 | 3.720 |
| K | 0 | 0 | 0 | 0 | 0 |
| A4 | 2.8089E-04 | 2.8774E-04 | 2.2262E-02 | 2.8980E-02 | -1.0761E-02 |
| A6 | 8.9929E-04 | -1.1312E-02 | 2.7861E-02 | 5.9386E-03 | -3.5966E-05 |
| A8 | -8.1657E-04 | 9.0086E-03 | -1.7442E-02 | 1.5612E-03 | 0.0000E+00 |
| A10 | 0.0000E+00 | 0.0000E+00 | 0.0000E+00 | 0.0000E+00 | 0.0000E+00 |

| Astigmatism correction surface profile | | |
|---|---|---|
| Surface coefficient | j=1 | j=2 |
| Surface innermost radius | 0.00 | 1.15 |
| dj | 0.00 | 0.03 |
| Rj | 4.976 | 5.142 |
| kj | 0 | 0 |
| A4j | -1.0941E-02 | -8.7075E-03 |
| A6j | -5.6840E-04 | -7.3611E-04 |
| A8j | 0.0000E+00 | 0.0000E+00 |
| A10j | 0.0000E+00 | 0.0000E+00 |

Numerical Example E

Fno. = 3.5, Focal distance = 4.84 (mm)

| Optical configuration | | | | | |
|---|---|---|---|---|---|
| Surface number | Remarks | Surface distance (mm) | Dispersion value (Abbe number) | Refractive index | Surface |
| Object surface | Object | 1200 | 0 | 1 | |
| First surface | First lens | 1.14 | 62.35 | 1.511 | Aspheric surface |
| Second surface | First lens | 0.2 | 0 | 1 | Aspheric surface |
| Aperture surface | Aperture | 0.66 | 0 | 1 | |
| Fourth surface | Second lens | 0.94 | 29.29 | 1.588 | Aspheric surface |
| Fifth surface | Second lens | 0.45 | 0 | 1 | Aspheric surface |
| Sixth surface | Third lens | 1.2 | 62.35 | 1.511 | Aspheric surface |
| Seventh surface | Third lens | 0.91 | 0 | 1 | Aspheric surface |
| Eighth surface | Glass plate | 0.3 | 64.17 | 1.518 | |
| Ninth surface | Glass plate | 0.7 | 0 | 1 | |
| Image surface | | | | | |

| Aspheric profile | | | | | | |
|---|---|---|---|---|---|---|
| Aspheric coefficient | Second surface | Third surface | Fourth surface | Fifth surface | Sixth surface | Sixth surface |
| R | 2.133 | 20.237 | -1.614 | -2.119 | 3.689 | 5.032 |
| K | 0 | 0 | 0 | 0 | 0 | 0 |
| A4 | 2.4538E-04 | 1.6643E-04 | 2.2594E-02 | 2.9200E-02 | -1.0924E-02 | -1.2438E-02 |
| A6 | 9.1072E-04 | -1.1418E-02 | 2.8037E-02 | 6.0198E-03 | -3.2699E-05 | -2.2851E-04 |
| A8 | -8.1097E-04 | 9.1113E-03 | -1.7602E-02 | 1.5921E-03 | 3.6804E-07 | -1.0915E-05 |
| A10 | 0.0000E+00 | 0.0000E+00 | 0.0000E+00 | 0.0000E+00 | 0.0000E+00 | 0.0000E+00 |

Numerical Example 6

Fno. = 3.5, Focal distance = 4.9

| Optical configuration | | | | | |
|---|---|---|---|---|---|
| Surface number | Remarks | Surface distance (mm) | Dispersion value (Abbe number) | Refractive index | Surface profile |
| Object surface | Object | 1200 | 0 | 1 | |
| First surface | First lens | 1.14 | 62.35 | 1.511 | Aspheric surface |
| Second surface | First lens | 0.2 | 0 | 1 | Aspheric surface |
| Aperture surface | Aperture | 0.66 | 0 | 1 | |
| Fourth surface | Second lens | 0.94 | 29.29 | 1.588 | Aspheric surface |
| Fifth surface | Second lens | 0.45 | 0 | 1 | DOE surface |
| Sixth surface | Third lens | 1.2 | 62.35 | 1.511 | Aspheric surface |
| Seventh surface | Third lens | 1.06 | 0 | 1 | Astigmatism correction surface |

(continued)

| Optical configuration | | | | | |
|---|---|---|---|---|---|
| Surface number | Remarks | Surface distance (mm) | Dispersion value (Abbe number) | Refractive index | Surface profile |
| Eighth Eighth surface | Glass plate | 0.3 | 64.17 | 1.518 | |
| Ninth surface | Glass plate | 0.7 | 0 | 1 | |
| Image surface | | | | | |

| Aspheric profile | | | | | |
|---|---|---|---|---|---|
| Aspheric coefficient | Second surface | Third surface | Fourth surface | Fifth surface | Sixth surface |
| R | 2.079 | 17.624 | -1.238 | -1.710 | 3.464 |
| K | 0 | 0 | 0 | 0 | 0 |
| A4 | -9.5770E-04 | -8.4709E-03 | 2.3514E-02 | 1.6891E-02 | -1.7806E-02 |
| A6 | 2.8511E-03 | -2.7958E-02 | 2.3282E-02 | 4.8867E-03 | 1.2091E-03 |
| A8 | -3.4398E-03 | 1.8176E-02 | 3.1049E-03 | 7.8011E-03 | 0.0000E+00 |
| A10 | 0.0000E+00 | 0.0000E+00 | 0.0000E+00 | 0.0000E+00 | 0.0000E+00 |

| Astigmatism correction surface profile | | |
|---|---|---|
| Surface coefficient | j=1 | j=2 |
| Surface innermost radius | 0.00 | 1.4 |
| dj | 0.00 | 0.0 |
| Rj | 4.087 | 4.706 |
| kj | 0 | 0 |
| A4j | -1.8453E-02 | -1.0151E-02 |
| A6j | -1.1148E-04 | -1.3562E-03 |
| A8j | 2.0663E-04 | 1.9353E-04 |
| A10j | 0.0000E+00 | 0.0000E+00 |

| Second-lens fifth-surface optical path difference function coefficient | |
|---|---|
| | Fifth surface |
| C2 | -7.2614E-03 |
| C4 | 4.9224E-03 |
| C6 | -1.8178E-03 |

Numerical Example 7

Fno. = 2.5(wide angle side), Fno. = 3.8 (telephoto side), Focal distance = 2.0 (mm); wide angle side, 4.0 (mm); telephoto side

| Optical configuration | | | | | | |
|---|---|---|---|---|---|---|
| Surface number | Remarks | Surface distance; wide angle side (mm) | Surface distance; telephoto side | Dispersion value (Abbe number) | Refractive index | Surface profile |
| Object surface | Object | 250 | | 0 | 1 | |
| First surface | First lens | 0.8 | 0.8 | 52.85 | 1.546 | Aspheric surface |
| Second surface | First lens | 3.0 | 0.99 | 0 | 1 | Aspheric surface |
| Aperture surface | Aperture | 0.3 | 0.3 | 0 | 1 | |
| Fourth surface | Second lens | 0.95 | 0.95 | 52.85 | 1.546 | Aspheric surface |
| Fifth surface | Second lens | 0.61 | 3.27 | 0 | 1 | DOE surface |
| Sixth surface | Third lens | 1.2 | 1.2 | 52.85 | 1.546 | Aspheric surface |
| Seventh surface | Third lens | 1.14 | 0.5 | 0 | 1 | Astigmatism correction surface |
| Eighth surface | Glass plate | 0.3 | 0.3 | 64.17 | 1.518 | |
| Ninth surface | Glass plate | 0.7 | 0.7 | 0 | 1 | |
| Image surface | | | | | | |

| Aspheric profile | | | | | |
|---|---|---|---|---|---|
| Aspheric coefficient | Second surface | Third surface | Fourth surface | Fifth surface | Sixth surface |
| R | 2.744 | 1.481 | 3.042 | -6.287 | -4.882 |
| K | 0 | 0 | 0 | 0 | 0 |
| A4 | -1.4101E-02 | 8.1044E-03 | -4.9287E-03 | 1.2663E-02 | -2.7903E-02 |
| A6 | 1.7603E-02 | -1.3433E-02 | -5.9235E-03 | -5.9148E-02 | 2.3341E-02 |
| A8 | -3.1312E-03 | 5.3696E-02 | 1.0912E-01 | 1.0228E-01 | -4.2183E-02 |
| A10 | 0.0000E+00 | -2.6706E-02 | 0.0000E+00 | 0.0000E+00 | 0.0000E+00 |

| Astigmatism correction surface profile | | |
|---|---|---|
| Surface coefficient | j=1 | j=2 |
| Surface innermost radius | 0.00 | 1.20 |
| dj | 0.00 | 0.02 |
| Rj | -1.515 | -1.763 |
| kj | 0 | 0 |

(continued)

| Astigmatism correction surface profile | | |
|---|---|---|
| Surface coefficient | j=1 | j=2 |
| A4j | 5.2554E-02 | -1.6003E-02 |
| A6j | 1.0740E-02 | 2.3405E-02 |
| A8j | -3.2720E-03 | -9.9267E-03 |
| A10j | -1.1968E-03 | 6.4561E-04 |

| Second-lens fifth-surface optical path difference function coefficient | |
|---|---|
| | Fifth surface |
| C2 | -1.843E-02 |
| C4 | 7.374E-03 |
| C6 | -5.419E-03 |

Numerical Example F

Fno. = 2.5(wide angle side), Fno. = 3.8 (telephoto side), Focal distance = 2.0(mm); wide angle side, 3.9 (mm); telephoto side

| Optical configuration | | | | | | |
|---|---|---|---|---|---|---|
| Surface number | Remarks | Surface distance; wide angle side (mm) | Surface distance; telephoto side | Dispersion value (Abbe number) | Refractive index | Surface profile |
| Object surface | Object | 250 | | 0 | 1 | |
| First surface | First lens | 0.8 | 0.8 | 52.85 | 1.546 | Aspheric surface |
| Second surface | First lens | 3.0 | 1.02 | 0 | 1 | Aspheric surface |
| Aperture surface | Aperture | 0.3 | 0.3 | 0 | 1 | |
| Fourth surface | Second lens | 1.0 | 1.0 | 52.85 | 1.546 | Aspheric surface |
| Fifth surface | Second lens | 0.57 | 3.23 | 0 | 1 | Aspheric surface |
| Sixth surface | Third lens | 1.14 | 1.14 | 52.85 | 1.546 | Aspheric surface |
| Seventh surface | Third lens | 1.19 | 0.5 | 0 | 1 | Aspheric surface |
| Eighth surface | Glass plate | 0.3 | 0.3 | 64.17 | 1.518 | |
| Ninth surface | Glass plate | 0.7 | 0.7 | 0 | 1 | |
| Image surface | | | | | | |

| Aspheric profile | | | | | |
| --- | --- | --- | --- | --- | --- |
| Aspheric coefficient | Second surface | Third surface | Fourth surface | Fifth surface | Sixth surface |
| R | 2.753 | 1.482 | 3.082 | -4.289 | -4:907 |
| K | 0 | 0 | 0 | 0 | 0 |
| A4 | -1.4128E-02 | 9.4320E-03 | -6.8055E-03 | 2.2965E-02 | -2.2360E-02 |
| A6 | 1.8568E-02 | -9.2702E-03 | -2.3350E-03 | -5.7420E-02 | 2.1159E-02 |
| A8 | -3.2655E-03 | 5.4418E-02 | 9.8359E-02 | 8.6401E-02 | -4.0470E-02 |
| A10 | 0.0000E+00 | -2.7459E-02 | 0.0000E+00 | 0.0000E+00 | 0.0000E+00 |

Numerical Example 8

Fno. = 3.5, Focal distance = 4.9(mm), Step amount (step amount in boundary radius) = 0.000061 (mm) Optical configuration

| Surface number | Remarks | Surface distance (mm) | Dispersion value (Abbe number) | Refractive index | Surface profile |
| --- | --- | --- | --- | --- | --- |
| Object surface | Object | 1200 | 0 | 1 | |
| First surface | First lens | 1.14 | 52.85 | 1.546 | Aspheric surface |
| Second surface | First lens | 0.2 | 0 | 1 | Aspheric surface |
| Aperture surface | Aperture | 0.66 | 0 | 1 | |
| Fourth surface | Second lens | 0.94 | 52.85 | 1.546 | Aspheric surface |
| Fifth surface | Second lens | 0.45 | 0 | 1 | DOE surface |
| Sixth surface | Third lens | 1.2 | 52.85 | 1.546 | Aspheric surface |
| Seventh surface | Third lens | 0.9 | 0 | 1 | Astigmatism correction surface |
| Eighth surface | Glass plate | 0.3 | 64.17 | 1.518 | |
| Ninth surface | Glass plate | 0.7 | 0 | 1 | |
| Image surface | | | | | |

| Aspheric profile | | | | | |
| --- | --- | --- | --- | --- | --- |
| Aspheric coefficient | Second surface | Third surface | Fourth surface | Fifth surface | Sixth surface |
| R | 2.409 | -43.369 | -1.223 | -1.506 | 5.724 |
| K | 0 | 0 | 0 | 0 | 0 |
| A4 | -7.8709E-03 | -2.3163E-02 | 6.0064E-02 | 5.6082E-02 | -9.2468E-04 |
| A6 | 1.2644E-03 | -1.4715E-02 | 3.3630E-02 | 2.8995E-02 | 3.1645E-04 |
| A8 | -4.7514E-03 | -3.1645E-03 | 7.2581E-02 | 8.0468E-03 | 0.0000E+00 |
| A10 | 0.0000E+00 | 9.7319E-03 | -6.3905E-02 | 0.0000E+00 | 0.0000E+00 |

| Astigmatism correction surface profile | | |
| --- | --- | --- |
| Surface coefficient | j=1 | j=2 |
| Surface innermost radius | 0.00 | 1.30 |

(continued)

| Astigmatism correction surface profile | | |
|---|---|---|
| Surface coefficient | j=1 | j=2 |
| dj | 0.00 | 0.03 |
| Rj | 3.851 | 4.998 |
| kj | 0 | 0 |
| A4j | -4.4218E-02 | -2.0091E-02 |
| A6j | 9.1475E-03 | 9.9901E-04 |
| A8j | -1.1151E-03 | 1.4673E-06 |
| A10j | 0.0000E+00 | 0.0000E+00 |

| Second-lens fifth-surface optical path difference function coefficient | |
|---|---|
| | Fifth surface |
| C2 | -6.9541E-03 |
| C4 | 1.0493E-02 |
| C6 | -5.7904E-03 |

**Claims**

1. An imaging optical system including at least one optical element, wherein at least one of surfaces of at least one optical element is divided into at least one zone area surrounding an optical axis and a central area including the optical axis and a step is provided between the at least one zone area and the central area so as to compensate field curvature and/or astigmatism caused by the imaging optical system.

2. An imaging optical system according to claim 1, wherein profiles of surfaces constituting at least one zone area and the central area are separately determined so as to compensate the field curvature and/or the astigmatism caused by the imaging optical system.

3. An imaging optical system according to claims 1 or 2, wherein, when the surfaces constituting at least one zone area and the central area are expressed by definition formulas in which an intersection point between each surface and the optical axis is set at an origin, origins on the optical axis of the surfaces differ from one another.

4. An imaging optical system including at least one optical element, wherein at least one of surfaces of at least one optical element is divided into at least one zone area surrounding an optical axis and a central area including the optical axis and profiles of surfaces constituting at least one zone area and the central area are separately determined so as to compensate field curvature and/or astigmatism caused by the imaging optical system.

5. An imaging optical system according to claim 4, wherein a step is provided between the at least one zone area and the central area so as to compensate field curvature and/or the astigmatism caused by the imaging optical system.

6. An imaging optical system according to claim 5, wherein the step in an optical axis direction in the boundary between the central area and the zone area or in the boundary between the plural zone areas is defined so as to satisfy the following formula:

$$1 < \lambda/(n-1)$$

where $\lambda$ is a wavelength of light and n is a refractive index of a lens.

**7.** An imaging optical system as in any one of claims 4 to 6, wherein, when the surfaces constituting at least one zone area and the central area including the optical axis are expressed by definition formulas in which an intersection point between each surface and the optical axis is set at an origin, the profiles of the surfaces constituting at least one zone area and the central area are separately determined by changing the definition formula of the surface constituting at least one zone area and the central area.

**8.** An imaging optical system as in any one of claims 1 to 7, wherein the surfaces constituting at least one zone area and the central area are defined by aspherical formulas.

**9.** An imaging optical system as in any one of claims 1 to 8, wherein an inclination of a step surface in the boundary between the central area and the zone area or in the boundary between the plural zone areas is determined as a function of an angle of a light beam passing through the boundary portion.

**10.** An imaging optical system according to claim 9, wherein, when it is assumed that the step surface is parallel to the optical axis in the boundary between the central area and the zone area or in the boundary between the plural zone areas, the inclination of the step surface is determined with respect to the optical axis so as to become angles ranging from a minimum angle and a maximum angle of light incident to the step surface.

**11.** An imaging optical system according to claim 9, wherein, when it is assumed that the step surface is parallel to the optical axis in the boundary between the central area and the zone area or in the boundary between the plural zone areas, the inclination of the step surface is determined with respect to the optical axis so as to become an average angle of the angles of light incident to the step surface.

**12.** An imaging optical system as in any one of claims 1 to 11, wherein peripheries of at least one zone area and the central area are defined by circles whose centers are points on the optical axis.

**13.** An imaging optical system as in any one of claims 1 to 12, wherein a diffractive optical element is provided in at least one surface of at least one optical element.

**14.** An imaging optical system as in any one of claims 1 to 13, wherein at least one zone area and the central area are provided in the surface nearest to an image side.

**15.** An imaging optical system as in any one of claims 1 to 14, wherein at least one optical element is a lens.

**16.** An imaging optical system according to claim 15, including a lens having a positive focal distance and a lens having a negative focal distance, wherein Abbe number of the lens having the negative focal distance is smaller than Abbe number of the lens having the positive focal distance.

**17.** An imaging optical system according to claim 16, including three lenses, wherein two of the three lenses have positive focal distances and the other has a negative focal distance.

**18.** An imaging optical system according to claim 15, including a plurality of lenses having a common optical axis, wherein the focal distance of the whole system is changed by changing a distance between the lenses in an optical axis direction.

**19.** An imaging optical system according to claim 8, wherein the surfaces expressing the central area and at least one zone area are optical axis symmetric rotation surfaces in which the following quadratic curve is rotated about the optical axis:

$$h=\sqrt{x^2+y^2}$$

$$c_j=\frac{1}{R_j}$$

$$Z_j = \frac{c_j h^2}{1 + \sqrt{1 - (1 + k_j) c_j^2 h^2}} + \sum_{i=1}^{m} A_{ij} h^i + d_j$$

where z is the optical axis, x and y are an coordinate of the surface perpendicular to the optical axis, k is a constant defining the profile of the quadratic curve, c is a central curvature, A is an correction coefficient, j is an identification number of the central area and zone areas surrounding the central area, the central area is set at the number of 1, the number is assigned in the order from the inside, and a center shift amount $d_j$ is determined based on the origin on the optical axis of the central area.

FIG. 1

FIG. 2

ASTIGMATISM,
FIELD CURVATURE

IMG HT

DISTORTION

IMG HT

FOCUS (MILLIMETERS)

% DISTORTION

FIG. 3

FIG. 4

ASTIGMATISM,
FIELD CURVATURE

DISTORTION

FIG. 5

FIG. 6

ASTIGMATISM,
FIELD CURVATURE

IMG HT

DISTORTION

IMG HT

FOCUS (MILLIMETERS)

% DISTORTION

# FIG. 7

# FIG. 8

ASTIGMATISM,
FIELD CURVATURE
IMG HT

DISTORTION
IMG HT

FOCUS (MILLIMETERS)

% DISTORTION

## FIG. 9

IMG HT

x

y

1.27

0.95

0.64

0.32

-0.10    -0.05    0.0    0.05    0.10
FOCUS (MILLIMETERS)

IMG HT

1.27

0.95

0.64

0.32

-8    -4    0    4    8
% DISTORTION

## FIG. 10

ASTIGMATISM,
FIELD CURVATURE

IMG HT

x    y

2.66

2.00

1.33

0.67

-0.08    -0.04    0.0    0.04    0.08
FOCUS (MILLIMETERS)

ASTIGMATISM

IMG HT

2.66

2.00

1.33

0.67

-1.0    -0.5    0.0    0.5    1.0
% DISTORTION

FIG. 11

FIG. 12

FIG. 13

OPTICAL PATH DIAGRAM

FIG. 14

FIG. 15

OPTICAL PATH DIAGRAM

LONGITUDINAL
CHROMATIC ABERRATION

ASTIGMATISM,
FIELD CURVATURE

DISTORTION

FIG. 16

EP 1 600 803 A1

39

Y   X   IMG HT

IMG HT

1.00

2.88

2.88

0.75

2.16

2.16

0.50

1.44

1.44

0.25

0.72

0.72

-0.050 -0.025  0.0   0.025  0.050

-0.10  -0.05   0.0   0.05   0.10

-5.0   -2.5    0.0    2.5    5.0

FOCUS (MILLIMETERS)

FOCUS (MILLIMETERS)

% DISTORTION

—————————— 680.0000NM
------------------ 640.0000NM
—— · —— · —— 600.0000NM
— — — — — — 560.0000NM

—— ··· —— ··· —— 520.0000NM
— — — — — — 480.0000NM
—— ···· —— ···· —— 440.0000NM

FIG. 17

WIDE ANGLE SIDE

TELEPHOTO ANGLE SIDE

# FIG. 18

## ABBERATION VIEW ON WIDE ANGLE SIDE

LONGITUDINAL
CHROMATIC ABERRATION

ASTIGMATISM,
FIELD CURVATURE

DISTORTION

FOCUS (MILLIMETERS)

FOCUS (MILLIMETERS)

% DISTORTION

680.0000NM
640.0000NM
600.0000NM
560.0000NM

520.0000NM
480.0000NM
440.0000NM

## ABBERATION VIEW ON TELEPHOTO SIDE

LONGITUDINAL
CHROMATIC ABERRATION

ASTIGMATISM,
FIELD CURVATURE

DISTORTION

FOCUS (MILLIMETERS)

FOCUS (MILLIMETERS)

% DISTORTION

680.0000NM
640.0000NM
600.0000NM
560.0000NM

520.0000NM
480.0000NM
440.0000NM

LONGITUDINAL
CHROMATIC ABERRATION

ASTIGMATISM,
FIELD CURVATURE

ASTIGMATISM

IMG HT

IMG HT

FOCUS (MILLIMETERS)

FOCUS (MILLIMETERS)

% DISTORTION

FIG. 19

EP 1 600 803 A1

680.0000NM
640.0000NM
600.0000NM
560.0000NM

520.0000NM
480.0000NM
440.0000NM

ABBERATION VIEW

FIG. 20

EP 1 600 803 A1

LONGITUDINAL
CHROMATIC ABERRATION

ASTIGMATISM,
FIELD CURVATURE

ASTIGMATISM

IMG HT

IMG HT

1.00

0.75

0.50

0.25

-0.050  -0.025   0.0   0.025  0.050

FOCUS (MILLIMETERS)

S     2.88   T

2.16

1.44

0.72

-0.2   -0.1   0.0   0.1   0.2

FOCUS (MILLIMETERS)

2.88

2.16

1.44

0.72

-2     -1     0     1     2

% DISTORTION

————————— 680.0000NM
------------------- 640.0000NM
——·—··—·— 600.0000NM
— — — — — — 560.0000NM

——·——··— 520.0000NM
— — — — — 480.0000NM
——·——····— 440.0000NM

# FIG. 21

## ABBERATION VIEW ON WIDE ANGLE SIDE

LONGITUDINAL
CHROMATIC ABERRATION

ASTIGMATISM,
FIELD CURVATURE

DISTORTION

## ABBERATION VIEW ON TELEPHOTO SIDE

FIG. 22

FIG. 23

FIG. 24

$$y = f \times \tan \theta$$

FOCAL DISTANCE f (mm)

IMAGE PICKUP DEVICE

<table>
<tr><td colspan="2" align="center"><strong>INTERNATIONAL SEARCH REPORT</strong></td><td>International application No.<br>PCT/JP2004/002532</td></tr>
</table>

**A. CLASSIFICATION OF SUBJECT MATTER**
Int.Cl$^7$ G02B13/00

According to International Patent Classification (IPC) or to both national classification and IPC

**B. FIELDS SEARCHED**

Minimum documentation searched (classification system followed by classification symbols)
Int.Cl$^7$ G02B13/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-55273 A (Enplas Corp.),<br>20 February, 2002 (20.02.02),<br>Full text; all drawings; in particular, claim 1;<br>Par. Nos. [0014], [0022]<br>& EP 1179742 A1      & US 2002/0054438 A1<br>& US 6717747 B2      & KR 2002012492 A | 1,6,9-15,19<br>2-5,7-8,<br>16-18 |
| X<br><br>Y | JP 1-123209 A (Konica Corp.),<br>16 May, 1989 (16.05.89),<br>Full text; all drawings<br>(Family: none) | 1-12,14-15,<br>19<br>13,16-18 |
| Y | JP 2002-116377 A (Riko Kogaku Kabushiki Kaisha),<br>19 April, 2002 (19.04.02),<br>Full text; all drawings; in particular, Claim 1<br>(Family: none) | 1-19 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 June, 2004 (01.06.04) | Date of mailing of the international search report<br>15 June, 2004 (15.06.04) |
|---|---|
| Name and mailing address of the ISA/<br>    Japanese Patent Office | Authorized officer |
| Facsimile No. | Telephone No. |

Form PCT/ISA/210 (second sheet) (January 2004)

**EP 1 600 803 A1**

<table>
<tr><td colspan="2" align="center">**INTERNATIONAL SEARCH REPORT**</td><td>International application No.<br>PCT/JP2004/002532</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-249007 A (Mahk Co., Ltd.),<br>17 September, 1999 (17.09.99),<br>Full text; all drawings; in particular, Claim 1;<br>Par. Nos. [0006] to [0009], [0012]<br>(Family: none) | 1-19 |
| Y | JP 2001-4916 A (Matsushita Electric Industrial Co., Ltd.),<br>12 January, 2001 (12.01.01),<br>Full text; all drawings<br>& WO 00/79322 A1 & JP 2001-083415 A<br>& EP 1122573 A1 & KR 2001072908 A<br>& KR 404311 B | 1-13,19 |
| Y | JP 10-186223 A (Asahi Optical Co., Ltd.),<br>14 July, 1998 (14.07.98),<br>Full text; all drawings; in particular, Claim 1;<br>Par. Nos. [0006]; examples 7 to 9<br>& US 6101035 A | 16-17 |
| Y | JP 2001-201684 A (Eastman Kodak Co.),<br>27 July, 2001 (27.07.01),<br>Full text; all drawings<br>& US 6377404 B1 & CN 1332384 A<br>& TW 470851 A | 1-5,7-8,12,<br>15,18-19 |

Form PCT/ISA/210 (continuation of second sheet) (January 2004)